# EUROPEAN PATENT APPLICATION

(11) **EP 4 191 355 A1**
(43) Date of publication of application: **07.06.2023**
(21) Application number: 21859569.2
(22) Date of filing: 30.03.2021
(51) Int. Cl.: G05B 23/02

(54) **UDS-BASED COMMUNICATION METHOD, ECU AND UPPER COMPUTER**

(30) Priority: 24.08.2020 CN 202010859611
(71) Applicant: Huawei Technologies Co., Ltd., Shenzhen, Guangdong 518129 (CN)
(72) Inventor: WANG, Zhi, Shenzhen, Guangdong 518129 (CN)
(74) Representative: Körber, Martin Hans
(86) International application number: PCT/CN2021/083900
(87) International publication number: WO 2022/041720

(57) **Abstract**

Embodiments of this application disclose a UDS-based communication method, an ECU, and an upper computer, which may be used in the field of automobile diagnosis information technologies. The method includes: customizing a private diagnosis service based on the UDS, where a service identifier (SID) of the private diagnosis service may be a SID of a diagnosis service type that is not defined in the UDS or a SID with a value Ox31, and the customized private diagnosis service includes two sub-services: creating a session and executing a standard diagnosis service (26 diagnosis services in a UDS diagnosis service list) on a thread of a specified session. An electronic control unit (ECU) creates an unlimited quantity of new sessions based on the private diagnosis service and a first diagnosis request, and/or executes a standard diagnosis service on a thread of a created session based on a second diagnosis request. The method is used in an intelligent vehicle, an autonomous vehicle, a networked vehicle, or an electric vehicle, to implement multi-session management, and resolve a problem that requests belonging to standard diagnosis services in the conventional UDS cannot be concurrently processed, and the execution efficiency is high.

## Description

This application claims priority to Chinese Patent Application No. 202010859611.7, filed with the China National Intellectual Property Administration on August 24, 2020 and entitled "UDS-BASED COMMUNICATION METHOD, ECU, AND UPPER COMPUTER", which is incorporated herein by reference in its entirety.

### TECHNICAL FIELD

This application relates to the field of automobile diagnosis information technologies, and in particular, to a UDS-based communication method, an ECU, and an upper computer.

### BACKGROUND

The automobile diagnosis technology started in the developed western countries in the 1960s. With increasing complexity of an automobile structure, especially rapid development of the intelligent driving technology, an electronic control unit (electronic control unit, ECU) on an automobile becomes increasingly complex and tends to be integrated into a super ECU. The complex ECU is followed by a complex design for X (design for X, DFX) of each phase or a phase in a product life cycle. In this case, a corresponding diagnosis method is required to diagnose internal information of the ECU, to meet a vehicle maintenance requirement. Therefore, the automobile diagnosis technology has been developed rapidly.

A unified diagnosis service (unified diagnosis service, UDS) is one of the standard protocols used in the automobile industry to diagnose and locate an ECU fault, for example, to determine an instruction to be sent to the ECU for reading a fault code, or an instruction to be sent for reading a data stream. To be vivid, the UDS is a language, yet not the only method, used by a set of instruments (generally referred to as an upper computer) to communicate with an ECU on a current automobile, when the set of instruments analyzes information/data inside the ECU.

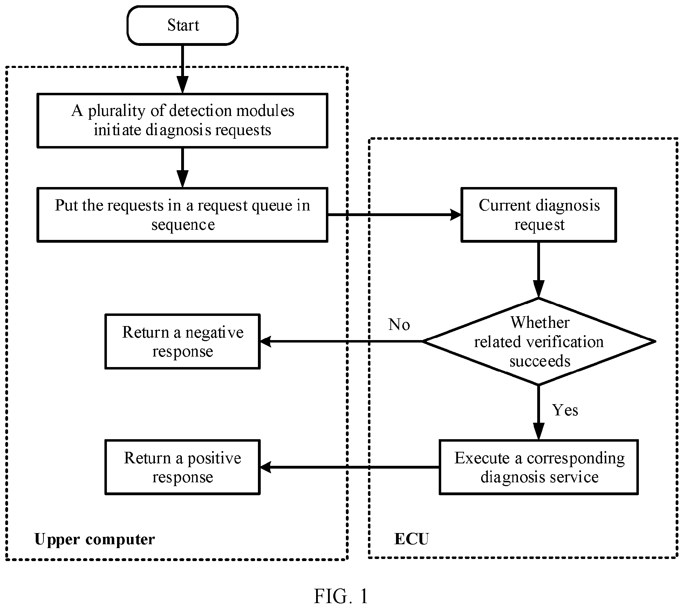

FIG. 1 shows a current UDS-based diagnosis communication process. Different detection modules can run on the upper computer at the same time. A plurality of detection modules can initiate diagnosis requests (request) independently. The upper computer puts these diagnosis requests into a request queue in sequence. Based on the UDS protocol, when receiving a diagnosis request, the ECU checks whether a current session (session) can execute the request. For example, if a service corresponding to the request is of a high level, a session needs to be at a corresponding high security level. Because there is only one session in an entire system and a security level of the session is globally shared, the upper computer has to put the requests of the detection modules into the request queue for serial execution, to ensure that session switchover does not cause a service exception. When an exception of a detection module causes a timeout mechanism, all diagnosis requests are not processed, resulting in poor real-time performance and robustness.

### SUMMARY

Embodiments of this application provide a UDS-based communication method, an ECU, and an upper computer. In the method, based on a private diagnosis service customized based on the UDS, the ECU creates a new session based on a diagnosis request belonging to the private diagnosis service, to resolve a problem that requests belonging to standard diagnosis services in the conventional UDS cannot be concurrently processed.

In view of this, embodiments of this application provide the following technical solutions.

According to a first aspect, an embodiment of this application first provides a UDS-based communication method, which may be used in the field of automobile diagnosis information technologies. The method includes: Corresponding diagnosis software (for example, CANoe or automobile UDS test software) runs on an upper computer, and a corresponding diagnosis service may be implemented between an ECU and the upper computer based on the UDS by using the diagnosis software. First, the ECU receives a first diagnosis request sent by the upper computer. The first diagnosis request belongs to a private diagnosis service customized based on the unified diagnosis service UDS, and the first diagnosis request specifically corresponds to a first sub-service of the customized private diagnosis service. Based on the customized private diagnosis service, the ECU creates a session based on the first diagnosis request, and obtains an identifier corresponding to the session. An identifier (similar to an ID) is allocated to each newly created session, to identify the corresponding session. After creating the session based on the first diagnosis request, the ECU further sends a positive response to the upper computer. The positive response may be referred to as a first positive response, and the first positive response includes the identifier corresponding to the newly created session.

In the foregoing implementation of this application, based on the private diagnosis service customized based on the UDS, the ECU can create a new session based on the first diagnosis request belonging to the private diagnosis service (a session inherent in the original UDS protocol still exists), to implement multi-session management, and resolve a problem that requests belonging to standard diagnosis services in the conventional UDS cannot be concurrently processed.

In a possible design of the first aspect, the foregoing steps may be repeated until a quantity of created sessions reaches a preset value. For example, a preset value n (for example, n=10) may be preset. In this case, 10 sessions may be created additionally by repeating the foregoing steps for 10 times. An advantage of this is that more diagnosis requests can be concurrently executed, and therefore execution efficiency of the ECU is improved.

In the foregoing implementation of this application, the foregoing steps are repeated until the quantity of created sessions reaches the preset quantity. An advantage of this is that more diagnosis requests can be concurrently executed on the ECU, and therefore execution efficiency of the ECU is improved.

In a possible design of the first aspect, for a created session, a standard diagnosis service may be executed on a thread corresponding to the session. Specifically, the method may further include: After creating the session based on the first diagnosis request and returning the identifier of the corresponding session to the upper computer, the ECU may further receive a second diagnosis request sent by the upper computer. The second diagnosis request includes a first identifier corresponding to a first session and a standard diagnosis service (which may be referred to as a first standard diagnosis service) defined in the UDS. The first session is one of created sessions. After receiving the second diagnosis request sent by the upper computer, the ECU may execute the first standard diagnosis service on a thread of the first session based on the second diagnosis request, to obtain a diagnosis result. After obtaining the diagnosis result, the ECU may send a second positive response including the diagnosis result to the upper computer.

In the foregoing implementation of this application, based on the private diagnosis service customized based on the UDS, the ECU can execute a standard diagnosis service on a thread of a created session based on the second diagnosis request belonging to the private diagnosis service, and different standard diagnosis services can be concurrently executed on threads of a plurality of sessions, to achieve high execution efficiency.

In a possible design of the first aspect, the first diagnosis request corresponding to the first sub-service of the private diagnosis service customized based on the UDS may include a first SID and a first data field. The first SID is a SID that is not defined in the UDS. For example, any one of Ox82-Ox82, 0x89-0xB9, OxBF-OxC2, and OxC9-0xF9 may be used as the first SID. The first SID is used to indicate that the first diagnosis request belongs to the private diagnosis service, the first data field is used to indicate that the first diagnosis request belongs to the first sub-service of the private diagnosis service, and the first sub-service is creating a session.

In the foregoing implementation of this application, the private diagnosis service is customized based on the UDS by using some SIDs that are not defined in the UDS. When the SID corresponding to the customized private diagnosis service is a SID that is not defined in the UDS, specific content included in the first diagnosis request corresponding to the first sub-service of the customized private diagnosis service is further described. The ECU may directly perform a corresponding action based on the content, and this is flexible.

In a possible design of the first aspect, a protocol format of the first diagnosis request may be represented by a format type "SID1+SF1". SID1 is the first SID and occupies one byte. SF1 is the first data field, represents the first sub-service of the private diagnosis service, and also usually occupies one byte (or may occupy a plurality of bytes, which is not limited). The first sub-service is creating a session.

In the foregoing implementation of this application, a specific protocol format of the first diagnosis request is described, and this is operable.

In a possible design of the first aspect, the second diagnosis request corresponding to a second sub-service of the private diagnosis service customized based on the UDS may further include the first SID and a second data field. The first SID is a SID that is not defined in the UDS. For example, any one of 0x82-0x82, Ox89-OxB9, OxBF-OxC2, and 0xC9-0xF9 may be used as the first SID. The first SID is used to indicate that the second diagnosis request belongs to the private diagnosis service, the second data field is used to indicate that the second diagnosis request belongs to the second sub-service of the private diagnosis service, and the second sub-service is executing a standard diagnosis service on a thread of a corresponding created session based on an identifier.

In the foregoing implementation of this application, the private diagnosis service is customized based on the UDS by using some SIDs that are not defined in the UDS. Specific content included in the second diagnosis request corresponding to the second sub-service of the customized private diagnosis service is further described. The ECU may directly perform a corresponding action based on the content, and this is flexible.

In a possible design of the first aspect, a protocol format of the second diagnosis request may be represented by a format type "SID1+SF2+D1+B1". SID1 is the first SID and occupies one byte. SF2 is the second data field, represents the second sub-service of the private diagnosis service, and also usually occupies one byte (or may occupy a plurality of bytes, which is not limited). D1 represents an identifier, and D1 corresponds to a created session, and also usually occupies one byte (or may occupy a plurality of bytes, which is not limited). B 1 represents a to-be-executed diagnosis service in 26 standard diagnosis services in Table 2. A format type of B 1 is the same as a format type of a standard diagnosis service. For details, refer to descriptions corresponding to Table 2. Details are not described herein.

In the foregoing implementation of this application, a specific protocol format of the second diagnosis request is described, and this is operable.

In a possible design of the first aspect, the first diagnosis request corresponding to the first sub-service of the private diagnosis service customized based on the UDS may include a second SID and a third data field. The second SID is a SID with a value Ox31 in the UDS, because a standard diagnosis service named "RoutineControl" is a diagnosis service with high freedom, and Ox31 may be used to add a special data field to a corresponding diagnosis request. The third data field is used to indicate that the first diagnosis request belongs to the private diagnosis service and belongs to the first sub-service of the private diagnosis service. The first sub-service is creating a session.

In the foregoing implementation of this application, some special data fields may be added to the diagnosis request corresponding to the standard diagnosis service Ox31 to customize the private diagnosis service. In addition, when the SID corresponding to the customized private diagnosis service is the SID with the value Ox31 in the UDS, content included in the first diagnosis request corresponding to the first sub-service of the customized private diagnosis service is further described, and the ECU may directly perform a corresponding action based on the content. This is flexible.

In a possible design of the first aspect, a protocol format of the first diagnosis request may be represented by a format type "SID2+SF1+X1". SID2 is a SID with a value Ox31 and occupies one byte. "SF1+X1" is the third data field, and X1 is a field of a function customized based on the UDS, and usually occupies two bytes (or may occupy one byte or more than two bytes, which is not limited). X1 is used to indicate that "SID2+SF1" belongs to the first sub-service of the private diagnosis service, and the first sub-service is creating a session.

In the foregoing implementation of this application, a specific protocol format of the first diagnosis request is described, and this is operable.

In a possible design of the first aspect, the second diagnosis request corresponding to the second sub-service of the private diagnosis service customized based on the UDS may further include the second SID and a fourth data field. The second SID is a SID with a value Ox31 in the UDS, the fourth data field is used to indicate that the second diagnosis request belongs to the private diagnosis service and a second sub-service of the private diagnosis service, and the second sub-service is executing a standard diagnosis service on a thread of a corresponding created session based on an identifier.

In the foregoing implementation of this application, some special data fields may be added to the diagnosis request corresponding to the standard diagnosis service Ox31 to customize the private diagnosis service. In addition, when the SID corresponding to the customized private diagnosis service is the SID with the value Ox31 in the UDS, content included in the second diagnosis request corresponding to the second sub-service of the customized private diagnosis service is further described, and the ECU may directly perform a corresponding action based on the content. This is flexible.

In a possible design of the first aspect, a protocol format of the second diagnosis request may be represented by a format type of "SID2+SF2+X1+D1+B1". SID2 is a SID (that is, the second SID) with a value Ox31 and occupies one byte. "SF2+X1" is the fourth data field, and X1 is a field of a function customized based on the UDS, and usually occupies two bytes (or one byte or more than two bytes may be occupied, which is not limited). X1 is used to indicate that "SID2+SF1" belongs to the second sub-service of the private diagnosis service. D1 represents an identifier, and D1 corresponds to a created session, and also usually occupies one byte (or may occupy a plurality of bytes, which is not limited). B1 represents a to-be-executed diagnosis service in 26 standard diagnosis services in Table 2. A format type of B1 is the same as a format type of a standard diagnosis service. For details, refer to descriptions corresponding to Table 2. Details are not described herein.

In the foregoing implementation of this application, a specific protocol format of the second diagnosis request is described, and this is operable.

According to a second aspect, an embodiment of this application further provides a UDS-based communication method. The method includes: An upper computer sends a first diagnosis request to an ECU, so that the ECU creates a session based on the first diagnosis request and obtains an identifier corresponding to the session. An identifier (similar to an ID) is correspondingly allocated to each newly created session, to identify the corresponding session. The first diagnosis request belongs to a private diagnosis service customized based on the UDS, and the first diagnosis request specifically corresponds to a first sub-service of the customized private diagnosis service. Then, the upper computer receives a first positive response including the identifier from the ECU.

In the foregoing implementation of this application, the upper computer sends the first diagnosis request to the ECU, so that the ECU can create a new session based on the private diagnosis service customized based on the UDS and the first diagnosis request belonging to the private diagnosis service (a session inherent in the original UDS protocol still exists), to implement multi-session management, and resolve a problem that requests belonging to standard diagnosis services in the conventional UDS cannot be concurrently processed.

In a possible design of the second aspect, the foregoing steps may be repeated, so that the ECU accordingly creates a plurality of sessions. For example, a preset value n (for example, n=10) may be preset. In this case, the ECU may additionally create 10 sessions by repeating the foregoing steps for 10 times. An advantage of this is that more diagnosis requests can be concurrently executed on the ECU, and therefore execution efficiency of the ECU is improved.

In the foregoing implementation of this application, the foregoing steps are repeated until the quantity of created sessions reaches the preset quantity. An advantage of this is that more diagnosis requests can be concurrently executed on the ECU, and therefore execution efficiency of the ECU is improved.

In a possible design of the second aspect, after receiving the first positive response from the ECU, the upper computer sends a second diagnosis request to the ECU, so that the ECU executes a first standard diagnosis service on a thread of a first session based on the second diagnosis request to obtain a diagnosis result. The second diagnosis request belongs to the private diagnosis service, and the second diagnosis request specifically corresponds to a second sub-service of the customized private diagnosis service. The second diagnosis request includes a first identifier corresponding to the first session and the first standard diagnosis service defined in the UDS, and the first session is one of created sessions. Then, the upper computer receives a second positive response including the diagnosis result from the ECU.

In the foregoing implementation of this application, the upper computer may further send the second diagnosis request to the ECU, so than the ECU can customize the private diagnosis service based on the UDS, and execute, based on the second diagnosis request belonging to the private diagnosis service, a standard diagnosis service on a thread of a created session, and different standard diagnosis services can be concurrently executed on threads of a plurality of sessions, to achieve high execution efficiency.

In a possible design of the second aspect, the first diagnosis request corresponding to the first sub-service of the private diagnosis service customized based on the UDS may include a first SID and a first data field. The first SID is a SID that is not defined in the UDS. For example, any one of Ox82-Ox82, 0x89-0xB9, OxBF-OxC2, and 0xC9-0xF9 may be used as the first SID. The first SID is used to indicate that the first diagnosis request belongs to the private diagnosis service, the first data field is used to indicate that the first diagnosis request belongs to the first sub-service of the private diagnosis service, and the first sub-service is creating a session.

In the foregoing implementation of this application, the private diagnosis service is customized based on the UDS by using some SIDs that are not defined in the UDS. When the SID corresponding to the customized private diagnosis service is a SID that is not defined in the UDS, specific content included in the first diagnosis request corresponding to the first sub-service of the customized private diagnosis service is further described. The ECU may directly perform a corresponding action based on the content, and this is flexible.

In a possible design of the second aspect, a protocol format of the first diagnosis request may be represented by a format type "SID1+SF1". SID1 is the first SID and occupies one byte. SF1 is the first data field, represents the first sub-service of the private diagnosis service, and also usually occupies one byte (or may occupy a plurality of bytes, which is not limited). The first sub-service is creating a session.

In the foregoing implementation of this application, a specific protocol format of the first diagnosis request is described, and this is operable.

In a possible design of the second aspect, the second diagnosis request corresponding to a second sub-service of the private diagnosis service customized based on the UDS further includes the first SID and a second data field. The first SID is a SID that is not defined in the UDS. For example, any one of 0x82-0x82, Ox89-OxB9, OxBF-0xC2, and 0xC9-0xF9 may be used as the first SID. The first SID is used to indicate that the second diagnosis request belongs to the private diagnosis service, the second data field is used to indicate that the second diagnosis request belongs to the second sub-service of the private diagnosis service, and the second sub-service is executing a standard diagnosis service on a thread of a corresponding created session based on an identifier.

In the foregoing implementation of this application, the private diagnosis service is customized based on the UDS by using some SIDs that are not defined in the UDS. Specific content included in the second diagnosis request corresponding to the second sub-service of the customized private diagnosis service is further described. The ECU may directly perform a corresponding action based on the content, and this is flexible.

In a possible design of the second aspect, a protocol format of the second diagnosis request may be represented by a format type "SID1+SF2+D1+B1". SID1 is the first SID and occupies one byte. SF2 is the second data field, represents the second sub-service of the private diagnosis service, and also usually occupies one byte (or may occupy a plurality of bytes, which is not limited). D1 represents an identifier, and D1 corresponds to a created session, and also usually occupies one byte (or may occupy a plurality of bytes, which is not limited). B1 represents a to-be-executed diagnosis service in 26 standard diagnosis services in Table 2. A format type of B1 is the same as a format type of a standard diagnosis service. For details, refer to descriptions of Table 2. Details are not described herein.

In the foregoing implementation of this application, a specific protocol format of the second diagnosis request is described, and this is operable.

In a possible design of the second aspect, the first diagnosis request corresponding to the first sub-service of the private diagnosis service customized based on the UDS may include a second SID and a third data field. The second SID is a SID with a value Ox31 in the UDS, because a standard diagnosis service named "RoutineControl" is a diagnosis service with high freedom, and Ox31 may be used to add a special data field to a corresponding diagnosis request. The third data field is used to indicate that the first diagnosis request belongs to the private diagnosis service and belongs to the first sub-service of the private diagnosis service. The first sub-service is creating a session.

In the foregoing implementation of this application, some special data fields may be added to the diagnosis request corresponding to the standard diagnosis service Ox31 to customize the private diagnosis service. In addition, when the SID corresponding to the customized private diagnosis service is the SID with the value Ox31 in the UDS, content included in the first diagnosis request corresponding to the first sub-service of the customized private diagnosis service is further described, and the ECU may directly perform a corresponding action based on the content. This is flexible.

In a possible design of the second aspect, a protocol format of the first diagnosis request may be represented by a format type "SID2+SF1+X1". SID2 is a SID with a value Ox31 and occupies one byte. "SF1+X1" is the third data field, and X1 is a field of a function customized based on the UDS, and usually occupies two bytes (or may occupy one byte or more than two bytes, which is not limited). X1 is used to indicate that "SID2+SF1" belongs to the first sub-service of the private diagnosis service, and the first sub-service is creating a session.

In the foregoing implementation of this application, a specific protocol format of the first diagnosis request is described, and this is operable.

In a possible design of the second aspect, the second diagnosis request corresponding to the second sub-service of the private diagnosis service customized based on the UDS may further include the second SID and a fourth data field. The second SID is a SID with a value Ox31 in the UDS, the fourth data field is used to indicate that the second diagnosis request belongs to the private diagnosis service and a second sub-service of the private diagnosis service, and the second sub-service is executing a standard diagnosis service on a thread of a corresponding created session based on an identifier.

In the foregoing implementation of this application, some special data fields may be added to the diagnosis request corresponding to the standard diagnosis service Ox31 to customize the private diagnosis service. In addition, when the SID corresponding to the customized private diagnosis service is the SID with the value Ox31 in the UDS, content included in the second diagnosis request corresponding to the second sub-service of the customized private diagnosis service is further described, and the ECU may directly perform a corresponding action based on the content. This is flexible.

In a possible design of the second aspect, a protocol format of the second diagnosis request may be represented by a format type of "SID2+SF2+X1+D1+B1". SID2 is a SID (that is, the second SID) with a value Ox31 and occupies one byte. "SF2+X1" is the fourth data field, and X1 is a field of a function customized based on the UDS, and usually occupies two bytes (or one byte or more than two bytes may be occupied, which is not limited). X1 is used to indicate that "SID2+SF1" belongs to the second sub-service of the private diagnosis service. D1 represents an identifier, and D1 corresponds to a created session, and also usually occupies one byte (or may occupy a plurality of bytes, which is not limited). B1 represents a to-be-executed diagnosis service in 26 standard diagnosis services in Table 2. A format type of B1 is the same as a format type of a standard diagnosis service. For details, refer to descriptions corresponding to Table 2. Details are not described herein.

In the foregoing implementation of this application, a specific protocol format of the second diagnosis request is described, and this is operable.

According to a third aspect, an embodiment of this application provides an ECU, and the ECU has a function of implementing the method according to any one of the first aspect or the possible implementations of the first aspect. The function may be implemented by hardware, or may be implemented by hardware executing corresponding software. The hardware or the software includes one or more modules corresponding to the function.

According to a fourth aspect, an embodiment of this application provides an upper computer, and the upper computer has a function of implementing the method according to any one of the second aspect or the possible implementations of the second aspect. The function may be implemented by hardware, or may be implemented by hardware executing corresponding software. The hardware or the software includes one or more modules corresponding to the function.

According to a fifth aspect, an embodiment of this application provides an ECU that may include a memory, a processor, and a bus system. The memory is configured to store a program. The processor is configured to invoke the program stored in the memory, to perform the method according to any one of the first aspect or the possible implementations of the first aspect of embodiments of this application.

According to a sixth aspect, an embodiment of this application provides an ECU that may include a memory, a processor, and a bus system. The memory is configured to store a program. The processor is configured to invoke the program stored in the memory, to perform the method according to any one of the second aspect or the possible implementations of the second aspect of embodiments of this application.

According to a seventh aspect, this application provides a computer-readable storage medium. The computer-readable storage medium stores instructions. When the instructions are run on a computer, the computer is enabled to perform the method according to any one of the first aspect or the possible implementations of the first aspect, or the computer is enabled to perform the method according to any one of the second aspect or the possible implementations of the second aspect.

According to an eighth aspect, an embodiment of this application provides a computer program product. When the computer program product runs on a computer, the computer is enabled to perform the method according to any one of the first aspect or the possible implementations of the first aspect, or the computer is enabled to perform the method according to any one of the second aspect or the possible implementations of the second aspect.

### BRIEF DESCRIPTION OF DRAWINGS

FIG. 1 is a schematic diagram of a current UDS-based diagnosis communication process;
FIG. 2 is a schematic diagram of a communications system according to an embodiment of this application;
FIG. 3 is a schematic flowchart of a UDS-based communication method according to an embodiment of this application;
FIG. 4 is a schematic flowchart of another UDS-based communication method according to an embodiment of this application;
FIG. 5 is a schematic diagram of a structure of an ECU according to an embodiment of this application;
FIG. 6 is a schematic diagram of a structure of an upper computer according to an embodiment of this application; and
FIG. 7 is a schematic diagram of a device according to an embodiment of this application.

### DESCRIPTION OF EMBODIMENTS

Embodiments of this application provide a UDS-based communication method, an ECU, and an upper computer. In the method, based on a private diagnosis service customized based on a UDS, the ECU creates a new session based on a diagnosis request belonging to the private diagnosis service, to resolve a problem that requests belonging to standard diagnosis services in the conventional UDS cannot be concurrently processed.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

Embodiments of this application relate to many related knowledge such as an automobile component, the UDS protocol, a diagnosis service, and a protocol format. To better understand the solutions in embodiments of this application, the following first describes related terms and concepts that may be used in embodiments of this application.

### (1) Electronic control unit (electronic control unit, ECU)

The ECU is also referred to as a vehicle-mounted computer. The ECU is a dedicated microcomputer controller or an automobile- dedicated single-chip microcomputer. Similar to a common computer, the ECU includes a microcontroller unit (microcontroller Unit, MCU), a read-only memory (read-only memory, ROM), a random access memory (random access memory, RAM), an input/output interface (I/O), an analog-to-digital converter (A/D), and a large-scale integrated circuit such as a shaper and driver.

In the ECU, a central processing unit (central processing unit, CPU) is a core part, and has computing and control functions. For example, when an engine is running, the central processing unit collects signals of sensors for computing, converts a result of the computing into a control signal, and controls work of a controlled object. The central processing unit further controls a memory (for example, a ROM), an I/O, and another external circuit. The ECU has fault self-diagnosis and protection functions. When a fault occurs in a system, the ECU automatically records fault code in the RAM and uses protection measures to read an alternative program from inherent programs to maintain running of a corresponding component (such as the engine). The fault information is displayed on a dashboard and does not disappear, so that a vehicle owner can find the fault in time and drive a vehicle to a repair shop. In normal cases, the RAM further continuously records driving data of the vehicle and learns the data recorded in real time through an adaptive program, to provide an optimal control status for adapting to driving habits of the vehicle owner.

A conventional ECU has a simple structure, and an entire vehicle may have dozens of ECUs or 100-odd ECUs, for example, an ECU applied to an engine and an ECU applied to an anti-lock brake system. Functions of each ECU are independent. With development of a digital vehicle, especially an autonomous driving technology, ECUs on the vehicle gradually become complex and tend to be centralized on a super ECU, and consequently, diagnosis difficult of the ECUs is also increasing.

### (2) Upper computer

The upper computer is a computer device that can directly send a control command. In embodiments of this application, a computer device that can communicate with an ECU based on the UDS protocol may be referred to as an upper computer (also referred to as a diagnosis instrument, a diagnosis machine, a diagnosis tool, or the like). For example, the upper computer may be an intelligent handheld terminal device such as a personal computer (personal computer, PC), a mobile phone, or a tablet computer, an intelligent wearable device such as a smart band or a smart watch, or even a single-chip microcomputer, provided that the device can run corresponding diagnosis software. In addition, any device that can communicate with the ECU based on the UDS protocol may be used as an upper computer in embodiments of this application. This is not specifically limited herein.

### (3) Unified diagnosis service (unified diagnosis service, UDS)

Development, adjustment, implementation, and maintenance of different diagnosis communication protocols bring unnecessary costs to vehicle manufacturers, system suppliers, and ECU suppliers. To resolve this problem, different technical protocols and data communication principles are compiled into an international ISO standard, which is usually referred to as the UDS (also referred to as ISO 14229-1). The UDS is a universal vehicle diagnosis protocol, and is irrelevant to a data link. Table 1 shows protocols used at layers of an open system interconnection (open system interconnection, OSI) model. The UDS is oriented to an application layer in the OSI model, and may be implemented on different vehicle buses (such as CAN, LIN, Flexray, Ethernet, and K-line). Currently, most vehicle manufacturers use a UDS on CAN diagnosis protocol. To be vivid, a set of instruments (generally referred to as an upper computer) is used to analyze information/data inside an ECU on a current automobile. A language used by the set of instruments to communicate with the ECU is UDS (not the only method).

**Table 1: Protocols used at each layer of the OSI model**

| OSI layers | Protocol type |
|---|---|
| Application layer | ISO 14229-1 (UDS) |
| Presentation layer | --- |
| Session layer | ISO 15765-3 |
| Transport layer | ISO 15765-2 |
| Network layer | ISO 15765-2 |
| Data link layer | ISO 11898-1 |
| Physical layer | ISO 11898 |

The UDS is essentially a series of diagnosis services. A diagnosis service defined in the UDS is referred to as a standard diagnosis service. There are 26 types of standard diagnosis services (all are hexadecimal data) in six categories. Table 2 is a UDS diagnosis service list. Each standard diagnosis service has an independent service identifier (service identifier, SID). It should be noted that a data identifier (data identifier, DID) in Table 2 is the basis for standard diagnosis services 0x22 and 0x2E to read/write specific data. In the standard diagnosis service 0x22, a DID is used to identify a current value of a record. In the standard diagnosis service 0x2E, a DID is used to request to write a record specified by the DID. The UDS has predefined some DIDs. For example, 0xF186 is an active diagnosis session data identifier, 0xF187 is a vehicle manufacturer spare part number data identifier, 0xF188 is a vehicle manufacturer ECU software number data identifier, and 0xF189 is a vehicle manufacturer ECU software version number data identifier.

**Table 2: UDS diagnosis service list**

| Category | SID( 0x) | Diagnosis service name | Description | Positive response | Negative response |
|---|---|---|---|---|---|
| Diagnosis and communication management functional unit | 10 | DiagnosticSessionControl | Used to control an ECU to switch between different session states. Execution permission of the diagnosis service varies in different sessions. | 50 | 7F |
| | 11 | ECUReset | An ECU is restarted by using a diagnosis request. | 51 | 7F |
| | 27 | Security Access | Before a diagnosis service with a high security level is executed, this service needs to be executed for identity authentication for unlocking. | 67 | 7F |
| | 28 | CommunicationControl | Used to switch on/off transmission and/or reception of some types of packets, and used when software is written or a large amount of data is written | 68 | 7F |
| | 3E | TesterPresent | Used to keep an ECU in a current session state, so | 7E | 7F |
| | | | that a previously activated diagnosis service function can remain active | | |
| | 83 | AccessTimingParameter | Used to read/modify a timing parameter of a communication link | C3 | 7F |
| | 84 | SecuredDataTransmission | A client uses this service to perform data transmission with an extended data link security to protect data transmission from third-party attacks. | C4 | 7F |
| | 85 | ControlDTCSetting | Used to stop or resume setting of diagnosis fault code, and is usually used together with the 0x28 service to disable DTC storage of an ECU | C5 | 7F |
| | 86 | ResponseOnEvent | Used to start or stop a response triggered by a specific event on a server (used in a development stage) | C6 | 7F |
| | 87 | LinkControl | Used to adjust a communication baud rate of an ECU | C7 | 7F |
| Data transmission | 22 | ReadDataByID | A client requests to read a | 62 | 7F |
| functional unit | | | current value of a record identified by a data identifier. This service is used together with the 0x2E service. | | |
| | 23 | ReadMemoryByAddress | A client requests a current value of data in a provided memory range. This service is used together with the 0x3D service. | 63 | 7F |
| | 24 | ReadScalingDataByID | A client requests to read scaling information of a record identified by a data identifier. | 64 | 7F |
| | 2A | ReadDataByPeriodicID | A client requests to schedule data in a server for periodic transmission. | 6A | 7F |
| | 2C | DynamicallyDefineDataI-dentifier | A client requests to dynamically define a data identifier read by the 0x22 service. | 6C | 7F |
| | 2E | WriteDataByID | A client requests to write a record specified by a data identifier. This service is used together with the 0x22 service. | 6E | 7F |
| | 3D | WriteMemoryBy Address | A client requests to overwrite a provided | 7D | 7F |
| | | | memory range. This service is used together with the 0x23 service. | | |
| Stored data transmission functional unit | 14 | ClearDiagnosisInformation | Used to clear DTC information stored in an ECU | 54 | 7F |
| | 19 | ReadDTCInformation | Used to read DTC information stored in an ECU | 59 | 7F |
| InputOutput control functional unit | 2F | InputOutputControlByID | Controls the input/output of an ECU and verifies functions of components on a production line | 6F | 7F |
| Routine functional unit | 31 | RoutineControl | Used to remotely request to start or stop a routine or request a routine result. This service is used to invoke some built-in operation sequences of the ECU. | 71 | 7F |
| Upload download functional unit | 34 | RequestDownload | Used to start downloading and transmission. The purpose is to inform an ECU to prepare to receive data. The ECU replies with a message indicating whether the ECU allows data transmission and a | 74 | 7F |
| | | | receiving capability. | | |
| | 35 | RequestUpload | Used by a client to request a server to upload data | 75 | 7F |
| | 36 | TransferData | A client transmits data to a server (download), or the server sends data to the client (upload) | 76 | 7F |
| | 37 | RequestTransferExit | Requests to exit after data transmission is complete | 77 | 7F |
| | 38 | RequestFileTransfer | A file transfer operation, which can be used to replace upload and download services | 78 | 7F |

The SID is essentially a type of directional communication and an interactive protocol. That is, the upper computer sends a specified diagnosis request (request) to the ECU. The request needs to contain the SID. For a positive response, the ECU returns [SID+0x40] to the upper computer. For example, if a SID of a sent diagnosis request is 0x10, a positive response is 0x50, and if a SID of a sent diagnosis request is 0x22, a positive response is 0x62. For a negative response, the ECU returns 0x7F+SID+NRC to the upper computer. A declaration is returned. A full name of NRC is Negative Response Code. That is, if the ECU rejects a request, the ECU returns an NRC to the upper computer. Different diagnosis services may contain different NRC, and different NRC has different meanings. It should be noted that in the current UDS-based diagnosis communication process, serial processing is required for all standard diagnosis services.

A UDS-based diagnosis communication process is as follows: The upper computer sends a diagnosis request (request) to the ECU, and the ECU returns a diagnosis response (response). The diagnosis response includes a positive response and a negative response. The UDS defines a unified protocol format for requests and responses of different diagnosis services.

Protocol formats of the diagnosis request may be summarized into four types: (1) Format type "SID": The diagnosis request includes only SID that occupies one byte (the SID occupies one byte regardless of the format type). (2) Format type "SID+SF": SF is an abbreviation of sub-function (sub-function), and SF also occupies one byte regardless of the format type. This format type exists when a standard diagnosis service has one or more sub-services. (3) Format type "SID+DID": bytes occupied by the DID are not limited and are determined by specific data. This format type is used for read/write. For example, the standard diagnosis service 0x22 and 0x2E are of this format type. (4) Format type " SID+SF+DID": similar to the third format type. A difference lies in that this format type exists when a standard diagnosis service has one or more sub-services. A protocol format of the positive response is similar to the format type of the diagnosis request. A difference lies in that [SID+0x40] is obtained by adding 0x40 to [SID] of the format type of the diagnosis request, and other parts remain unchanged. A protocol format of the negative response is "0x7F+SID+NRC".

For ease of understanding, the following uses a data field in a CAN bus (the UDS defines a data field in a frame) as an example to describe protocol formats of some standard diagnosis services. Each diagnosis request or diagnosis response includes 8 bytes of data. Generally, the first byte indicates a valid data field in the remaining 7 bytes, except in special cases.

Example 1: The format type "SID+SF" is illustrated. It is assumed that a diagnosis request sent by the upper computer to the ECU is 02 10 01 xx xx xx xx xx. 0 in 02 indicates a network layer single frame, 2 in 02 indicates that a data field has two valid bytes, 10 (which is hexadecimal 10 and is actually 0x10, the following is the same) indicates the SID, and corresponds to a standard diagnosis service "DiagnosticSessionControl", and 01 indicates a sub-function. If the diagnosis response returned by the ECU to the upper computer is 02 50 01 xx xx xx xx xx, 02 indicates the same meaning as above, [10+40]=50 indicates a positive response to the SID (that is, a positive response is returned), and 01 indicates a sub-function. If the diagnosis response returned by the ECU to the upper computer is 03 7F 10 22 xx xx xx xx, 0 in 03 indicates a network layer single frame, 3 in 03 indicates that a data field has three valid bytes, 7F indicates a negative response, 10 is the SID, and 22 is NRC.

Example 2: The format type "SID+DID" is illustrated. It is assumed that a diagnosis request sent by the upper computer to the ECU is 22+DID, and the DID usually occupies two bytes (except in special cases). Therefore, in this case, the first byte no longer indicates a valid data field in the remaining seven bytes. 22 is the SID, and corresponds to a standard diagnosis service "ReadDataByID", and the DID is used to identify a current value of a record. If a diagnosis response returned by the ECU to the upper computer is 62+DID+Data, [22+40]=62 indicates that a positive response is returned, the DID is the same as above, and Data indicates a current value of an identified record. If a negative response is returned, a format is similar to that described above, and details are not described herein.

The following describes embodiments of this application with reference to the accompanying drawings. It is clear that the described embodiments are merely a part rather than all of the embodiments of this application. A person of ordinary skill in the art may learn that as a technology evolves and a new scenario emerges, technical solutions provided in embodiments of this application are also applicable to a similar technical problem.

First, embodiments of this application provide a UDS-based customized private diagnosis service, as shown in Table 3. Different from the 26 standard diagnosis services shown in Table 2, the private diagnosis service is customized based on the UDS, and may include a first sub-service and a second sub-service of the private diagnosis service. The first sub-service of the private diagnosis service is creating a session, and the second sub-service of the private diagnosis service is executing a standard diagnosis service on a thread of a specified session. A diagnosis request of the first sub-service may be referred to as a first diagnosis request, a diagnosis request of the second sub-service may be referred to as a second diagnosis request, a positive response and a negative response of the first diagnosis request may be referred to as a first positive response and a first negative response, respectively, and a positive response and a negative response of the second diagnosis request may be referred to as a second positive response and a second negative response, respectively. It should be noted that a SID of the customized private diagnosis service may be referred to as a first SID, and the first sub-service and the second sub-service may be represented by data fields SF1 and SF2 that occupy a quantity of bytes (for example, occupy one byte) in a protocol format, as shown in Table 3.

**Table 3: UDS-based customized private diagnosis service**

| SID(Ox) | Diagnosis service name | Sub-service name | Positive response | Negative response |
|---|---|---|---|---|
| First SID | Customized private diagnosis service | Create a session | [SID+0x40]+SF1 | 7F |
| | | Execute a standard diagnosis service on a thread of a specified session | [SID+0x40]+SF2 | 7F |

It should be noted that there are 26 standard diagnosis services defined in the UDS in six categories (as shown in Table 2). Each type of standard diagnosis service corresponds to one SID (26 SIDs in total). Actually, the UDS also includes some undefined SIDs, as shown in Table 4. Table 4 shows usage of all SIDs. It can be seen from Table 4 that 0x82-0x82, 0x89-0xB9, OxBF-OxC2, and 0xC9-0xF9 are undefined SID reserved by ISO 14229-1 (UDS). Therefore, in some implementations of this application, these undefined SIDs may be used as the SID of the customized private diagnosis service in embodiments of this application, that is, the first SID shown in Table 3.

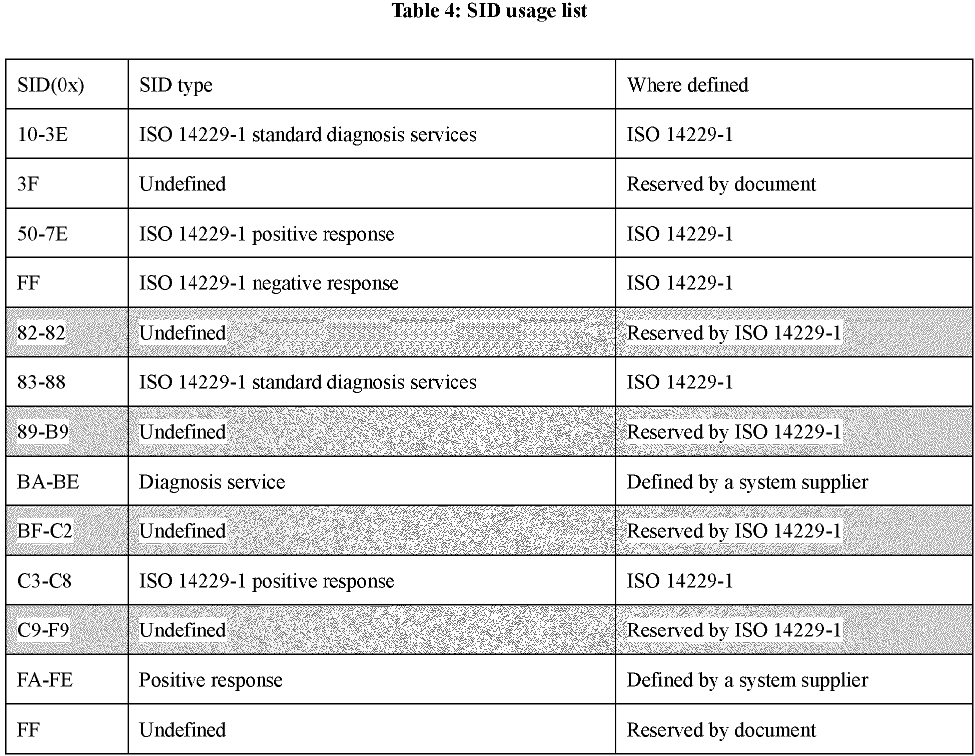

It should be noted that, in some implementations of this application, a SID may be selected from 0x82-0x82, 0x89-0xB9, OxBF-OxC2, and 0xC9-0xF9 that are not defined in the UDS in Table 4 as the first SID, or a SID with a value ranked higher may be preferentially selected as the first SID. A selection manner is not specifically limited herein. Preferably, an SID with a value ranked higher is selected as the first SID (for example, 0x82 is selected as the first SID). This is because a protocol format of the positive response received by the upper computer from the ECU is [SID+0x40], and in this way, a returned positive response does not exceed a value range of the entire SID.

For ease of understanding, the following separately describes the first sub-service and the second sub-service of the customized private diagnosis service shown in Table 3.

### (1) First sub-service of the private diagnosis service

### a. First diagnosis request

First, the first diagnosis request corresponding to the first sub-service is described. The first diagnosis request includes the first SID and a first data field. The first SID is a SID that is not defined in the UDS. For example, any one of Ox82-Ox82, 0x89-0xB9, OxBF-OxC2, and 0xC9-0xF9 may be used as the first SID. The first SID is used to indicate that the first diagnosis request belongs to the private diagnosis service, the first data field is used to indicate that the first diagnosis request belongs to the first sub-service of the private diagnosis service, and the first sub-service is creating a session.

Specifically, in some implementations of this application, a protocol format of the first diagnosis request may be represented by a format type "SID1+SF1". SID1 is the first SID and occupies one byte. SF1 is the first data field, represents the first sub-service of the private diagnosis service, and also usually occupies one byte (or may occupy a plurality of bytes, which is not limited).

### b. First positive response

Each diagnosis request corresponds to a positive response and a negative response. A positive response corresponding to the first diagnosis request is the first positive response, and a protocol format of the first positive response may be represented by "[SID1+0x40]+SF1". [SID 1+0x40] indicates that a positive response is returned, and "[SID1+0x40]+SF1" indicates that a positive response of the first sub-service of the private diagnosis service is returned.

### c. First negative response

Similar to the 26 standard diagnosis services shown in Table 2, if the ECU returns 0x7F+SID1+NRC to the upper computer, it indicates that the first negative response is returned. Details are not described herein.

For ease of understanding, the following uses an example to describe a specific process of the diagnosis request and the diagnosis response corresponding to the first sub-service of the private diagnosis service. It is assumed that a diagnosis request sent by the upper computer to the ECU is 02 82 01 xx xx xx xx xx, where 0 in 02 represents a network layer single frame, 2 in 02 represents that the data field has two valid bytes, 82 is the first SID (which is hexadecimal 82 and is actually 0x82, the following is the same) and represents a UDS-based customized private diagnosis service, and 01 is the first sub-service, and represents creating a session. If a diagnosis response returned by the ECU to the upper computer is 03 C2 01 ff xx xx xx xx, 0 in 03 represents a network layer single frame, 3 in 03 represents that the data field has three valid bytes, [82+40]=C2 represents a positive response to the first SID (that is, a positive response is returned), 01 is the first sub-service, and ff represents an identifier corresponding to a created session. An identifier (similar to an ID) is correspondingly allocated to each newly created session, to identify the corresponding session. For example, if three sessions are created, three identifiers may be allocated to corresponding sessions. If a diagnosis response returned by the ECU to the upper computer is 04 7F 82 01 22 xx xx xx, 0 in 04 represents a network layer single frame, 4 in 04 represents that the data field has four valid bytes, 7F represents that a negative response is returned, 82 is the first SID, 01 is the first sub-service, and 22 is NRC.

### (2) Second sub-service of the private diagnosis service

### a. Second diagnosis request

Next, the second diagnosis request corresponding to the second sub-service is described. The second diagnosis request includes the first SID, a second data field, an identifier corresponding to a created session, and a standard diagnosis service defined in the UDS. The first SID is a SID that is not defined in the UDS. For example, any one of Ox82-Ox82, 0x89-0xB9, OxBF-OxC2, and 0xC9-0xF9 may be used as the first SID. The first SID is used to indicate that the second diagnosis request belongs to the private diagnosis service, the second data field is used to indicate that the second diagnosis request belongs to the second sub-service of the private diagnosis service, and the second sub-service is executing a standard diagnosis service on a thread of a corresponding created session based on an identifier.

Specifically, in some implementations of this application, a protocol format of the second diagnosis request may be represented by a format type "SID1+SF2+D1+B1". SID1 is the first SID and occupies one byte. SF2 is the second data field, represents the second sub-service of the private diagnosis service, and also usually occupies one byte (or may occupy a plurality of bytes, which is not limited). D1 represents an identifier, and D1 corresponds to a created session, and also usually occupies one byte (or may occupy a plurality of bytes, which is not limited). B 1 represents a to-be-executed diagnosis service in the 26 standard diagnosis services in Table 2. A format type of B1 is the same as a format type of a standard diagnosis service. For details, refer to descriptions corresponding to Table 2. Details are not described herein.

### b. Second positive response

Similarly, each diagnosis request corresponds to a positive response and a negative response. A positive response corresponding to the second diagnosis request is the second positive response, and a protocol format of the second positive response may be represented by "[SID1+0x40]+SF2". [SID1+0x40] indicates that a positive response is returned, and "[SID1+0x40]+SF2" indicates that a positive response of the second sub-service of the private diagnosis service is returned.

### c. Second negative response

Similar to the 26 standard diagnosis services shown in Table 2, if the ECU returns 0x7F+SID1+NRC to the upper computer, it indicates that the second negative response is returned. Details are not described herein.

For ease of understanding, the following uses an example to describe a specific process of the diagnosis request and the diagnosis response corresponding to the second sub-service of the private diagnosis service. It is assumed that a diagnosis request sent by the upper computer to the ECU is 06 82 02 ff 22 00 01 xx, where 0 in 06 represents a network layer single frame, 6 in 06 represents that the data field has six valid bytes, 82 is the first SID (which is hexadecimal 82 and is actually 0x82, the following is the same) and represents a UDS-based customized private diagnosis service, 02 is the second sub-service and represents that a standard diagnosis service is executed on a thread of a corresponding created session based on an identifier, ff is an identifier (which may be referred to as a first identifier) corresponding to a created session (which may be referred to as a first session), "22 00 01" represents a standard diagnosis service named "ReadDataByID", 22 is a SID corresponding to the standard diagnosis service, and 00 01 is a corresponding DID. The second diagnosis request 06 82 02 ff 22 3e 5a xx means: executing a standard diagnosis service ReadDataByID on a thread of the first session. If a diagnosis response returned by the ECU to the upper computer is 05 C2 02 62 3e 5a xx xx, 0 in 05 represents a network layer single frame, 5 in 05 represents that the data field has five valid bytes, [82+40]=C2 represents a positive response to the first SID (that is, a positive response is returned), 02 represents a second sub-service, [22+40]=62 represents a positive response to the standard diagnosis service, "3e 5a" is specific content read based on the standard diagnosis service. If a diagnosis response returned by the ECU to the upper computer is 04 7F 82 02 22 xx xx xx, 0 in 04 represents a network layer single frame, 4 in 04 represents that the data field has four valid bytes, 7F represents that a negative response is returned, 82 is the first SID, 02 is the second sub-service, and 22 is NRC.

It should be noted that the private diagnosis service is customized based on the UDS by using some SIDs that are not defined in the UDS. An advantage of this is that a standard diagnosis service and a customized private diagnosis service can be directly determined based on SIDs, which is convenient for differentiation.

However, in some embodiments of this application, some special data fields may be added to a diagnosis request corresponding to a standard diagnosis service, to customize the private diagnosis service. For example, the standard diagnosis service named "RoutineControl" is a diagnosis service with high freedom, and Ox31 may be used to add special data fields to a corresponding diagnosis request. For example, af bf occupying two bytes is added (which is merely an example, and may also be another data field, and is not limited), and af bf represents a customized private diagnosis service, where af is similar to the first SID and represents the request is a private diagnosis request, and bf represents that the private diagnosis request has a sub-service. The advantage of this manner is that a standard diagnosis service (such as Ox31) with high freedom in the UDS is used, and a protocol header is added by nesting the original diagnosis request. In this way, standard diagnosis requests can be processed concurrently without introducing a new SID.

For ease of understanding, the following separately describes the first sub-service and the second sub-service of the private diagnosis service customized by using 0x31.

### (1) First sub-service of the private diagnosis service

### a. First diagnosis request

First, the first diagnosis request corresponding to the first sub-service is described. The first diagnosis request includes a second SID and a third data field. The second SID is a SID with a value Ox31 in the UDS, the third data field is used to indicate that the first diagnosis request belongs to the private diagnosis service and belongs to the first sub-service of the private diagnosis service, and the first sub-service is creating a session.

Specifically, in some implementations of this application, a protocol format of the first diagnosis request may be represented by a format type "SID2+SF1+X1". SID2 is a SID with a value Ox31 and occupies one byte. "SF1+X1" is the third data field, and X1 is a field of a function customized based on the UDS, and usually occupies two bytes (or may occupy one byte or more than two bytes, which is not limited). X1 is used to indicate that "SID2+SF1" belongs to the first sub-service of the private diagnosis service.

### b. First positive response

Each diagnosis request corresponds to a positive response and a negative response. A positive response corresponding to the first diagnosis request is the first positive response, and a protocol format of the first positive response may be represented by "[SID2+0x40]+SF1". [SID2+0x40] indicates that a positive response is returned, and "[SID2+0x40]+SF1" indicates that a positive response of the first sub-service of the private diagnosis service is returned.

### c. First negative response

Similar to the 26 standard diagnosis services shown in Table 2, if the ECU returns 0x7F+SID2+NRC to the upper computer, it indicates that the first negative response is returned. Details are not described herein.

For ease of understanding, the following uses an example to describe a specific process of the diagnosis request and the diagnosis response corresponding to the first sub-service of the private diagnosis service. It is assumed that a diagnosis request sent by the upper computer to the ECU is 04 31 01 af bf xx xx xx, where 0 in 04 represents a network layer single frame, 4 in 04 represents that the data field has four valid bytes, 31 is the second SID (which is hexadecimal 31 and is actually Ox31, the following is the same), "afbf" is used to indicate that "31 01" represents the first sub-service of the private diagnosis service, that is, creating a session. If a diagnosis response returned by the ECU to the upper computer is 03 71 01 ff xx xx xx xx, 0 in 03 represents a network layer single frame, 3 in 03 represents that the data field has three valid bytes, [31+40]=71 represents a positive response to the second SID (that is, a positive response is returned), 01 is the first sub-service, and ff represents an identifier corresponding to a created session. An identifier (similar to an ID) is correspondingly allocated to each newly created session, to identify the corresponding session. If a diagnosis response returned by the ECU to the upper computer is 04 7F 31 01 22 xx xx xx, 0 in 04 represents a network layer single frame, 4 in 04 represents that the data field has four valid bytes, 7F represents that a negative response is returned, 31 is the second SID, 01 is the first sub-service, and 22 is NRC.

### (2) Second sub-service of the private diagnosis service

### a. Second diagnosis request

Next, the second diagnosis request corresponding to the second sub-service is described. The second diagnosis request includes the second SID, a fourth data field, an identifier corresponding to a created session, and a standard diagnosis service defined in the UDS. The second SID is a SID with a value Ox31 in the UDS. The fourth data field is used to indicate that the second diagnosis request belongs to the private diagnosis service and belongs to the second sub-service of the private diagnosis service, and the second sub-service is executing a standard diagnosis service on a thread of a corresponding created session based on an identifier.

Specifically, in some implementations of this application, a protocol format of the second diagnosis request may be represented by a format type of "SID2+SF2+X1+D1+B1". SID2 is a SID (that is, the second SID) with a value Ox31 and occupies one byte. "SF2+X1" is the fourth data field, and X1 is a field of a function customized based on the UDS, and usually occupies two bytes (or one byte or more than two bytes may be occupied, which is not limited). X1 is used to indicate that "SID2+SF1" belongs to the second sub-service of the private diagnosis service. D1 represents an identifier, and D1 corresponds to a created session, and also usually occupies one byte (or may occupy a plurality of bytes, which is not limited). B1 represents a to-be-executed diagnosis service in 26 standard diagnosis services in Table 2. A format type of B1 is the same as a format type of a standard diagnosis service. For details, refer to descriptions corresponding to Table 2. Details are not described herein.

### b. Second positive response

Similarly, each diagnosis request corresponds to a positive response and a negative response. A positive response corresponding to the second diagnosis request is the second positive response, and a protocol format of the second positive response may be represented by "[SID2+Ox40]+SF2". [SID2+0x40] indicates that a positive response is returned, and "[SID2+0x40]+SF2" indicates that a positive response of the second sub-service of the private diagnosis service is returned.

### c. Second negative response

Similar to the 26 standard diagnosis services shown in Table 2, if the ECU returns 0x7F+SID2+NRC to the upper computer, it indicates that the second negative response is returned. Details are not described herein.

For ease of understanding, the following uses an example to describe a specific process of the diagnosis request and the diagnosis response corresponding to the second sub-service of the private diagnosis service. It is assumed that a diagnosis request sent by the upper computer to the ECU is 07 31 02 ef ff 22 00 01, where 0 in 07 represents a network layer single frame, 7 in 07 represents that the data field has seven valid bytes, 31 is the second SID (which is hexadecimal 31 and is actually 0x31, the following is the same), ef is used to indicate that "31 02" is a UDS-based customized private diagnosis service, 02 in"31 02" is the second sub-service and represents that a standard diagnosis service is executed on a thread of a corresponding created session based on an identifier, ff is an identifier (which may be referred to as a first identifier) corresponding to a created session (which may be referred to as a first session), "22 00 01" represents a standard diagnosis service named "ReadDataByID", 22 is a SID corresponding to the standard diagnosis service, and 00 01 is a corresponding DID. The second diagnosis request 07 31 02 ef ff 22 00 01 means: executing a standard diagnosis service ReadDataByID on a thread of the first session. If a diagnosis response returned by the ECU to the upper computer is 05 71 02 62 3e 5a xx xx, 0 in 05 represents a network layer single frame, 5 in 05 represents that the data field has five valid bytes, [31+40]=71 represents a positive response to the second SID (that is, a positive response is returned), 02 represents a second sub-service, [22+40]=62 represents a positive response to the standard diagnosis service, "3e 5a" is specific content read based on the standard diagnosis service. If a diagnosis response returned by the ECU to the upper computer is 04 7F 31 02 22 xx xx xx, 0 in 04 represents a network layer single frame, 4 in 04 represents that the data field has four valid bytes, 7F represents that a negative response is returned, 31 is the second SID, 02 is the second sub-service, and 22 is NRC.

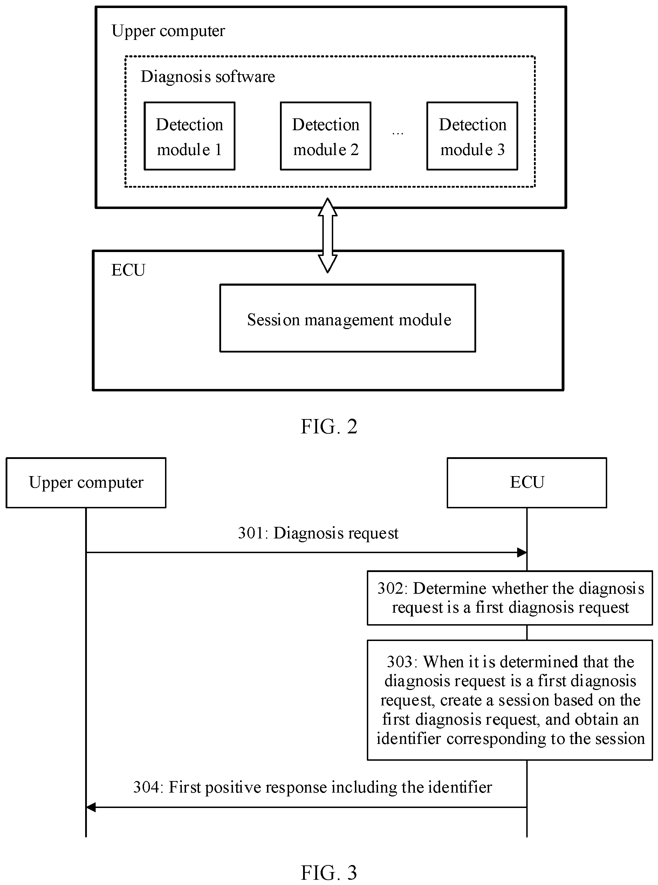

In addition, an embodiment of this application further provides a communications system. The communications system includes an upper computer and an ECU (one or more ECUs may be included, and FIG. 2 shows one ECU). Corresponding diagnosis software (for example, CANoe or automobile UDS test software) runs on the upper computer. The ECU and the upper computer can implement a corresponding diagnosis service based on the UDS by using the diagnosis software. The diagnosis software includes a detection module 1, a detection module 2, ..., and a detection module n. Each detection module may independently send a diagnosis request to the ECU. In the communications system provided in this embodiment of this application, no request queue is required, and a diagnosis request generated by a detection module may be directly sent to the ECU. A session management module is additionally added to the ECU. The session management module is configured to create a new session, to implement multi-session management.

Based on the communications system shown in FIG. 2, an embodiment of this application further provides a UDS-based communication method. In addition to the 26 standard diagnosis services shown in Table 2, the UDS further includes the UDS-based customized private diagnosis service. Therefore, with reference to the foregoing description, the UDS-based communication method provided in this embodiment of this application is shown in FIG. 3, and may include the following steps.

301: An ECU receives a diagnosis request sent by an upper computer.

Corresponding diagnosis software (for example, CANoe or automobile UDS test software) runs on the upper computer. The ECU and the upper computer can implement a corresponding diagnosis service based on the UDS by using the diagnosis software. First, the ECU receives the diagnosis request sent by the upper computer.

302: The ECU determines whether the diagnosis request is a first diagnosis request.

After receiving the diagnosis request, the ECU may determine whether the diagnosis request is the first diagnosis request based on a SID and/or a data field carried in the diagnosis request on the premise that a corresponding permission is met. A determining manner includes but is not limited to the following manners:
a. Assuming that the SID carried in the diagnosis request is a SID (namely, a first SID) that is not defined in the UDS, it indicates that the diagnosis request belongs to a private diagnosis service customized based on the UDS. Further, a sub-service of the private diagnosis service to which the diagnosis request belongs is determined based on the data field carried in the diagnosis request. Assuming that the data field carried in the diagnosis request is a first data field, it indicates that the diagnosis request is the first diagnosis request.
b. Assuming that the SID carried in the diagnosis request is a SID (namely, a second SID) with a value Ox31 in the UDS, whether the data field carried in the diagnosis request is a third data field is further determined. Assuming that the data field carried in the diagnosis request is the third data field, it indicates that the diagnosis request is the first diagnosis request.

303: When determining that the diagnosis request is a first diagnosis request, the ECU creates a session based on the first diagnosis request, and obtains an identifier corresponding to the session.

When the ECU determines that the diagnosis request is the first diagnosis request, based on the private diagnosis service customized based on the UDS, the ECU creates a session based on the first diagnosis request, and obtains an identifier corresponding to the session. An identifier (similar to an ID) is allocated to each newly created session, to identify the corresponding session.

304: The ECU sends a first positive response including the identifier to the upper computer.

After creating the session based on the first diagnosis request, the ECU further sends a positive response to the upper computer. The positive response may be referred to as a first positive response, and the first positive response includes the identifier corresponding to the newly created session.

After step 301 to step 304, a session is created.

In the foregoing implementation of this application, based on the private diagnosis service customized based on the UDS, the ECU can create a new session based on the first diagnosis request belonging to the private diagnosis service (a session inherent in the original UDS protocol still exists), to implement multi-session management, and resolve a problem that requests belonging to standard diagnosis services in the conventional UDS cannot be concurrently processed.

It should be noted that in some implementations of this application, step 301 to step 304 may be repeated until a quantity of created sessions reaches a preset value. For example, a preset value n (for example, n=10) may be preset. In this case, 10 sessions may be created additionally by repeating the foregoing steps for 10 times. An advantage of this is that more diagnosis requests can be concurrently executed, and therefore execution efficiency of the ECU is improved.

It should be further noted that in some implementations of this application, for a created session, a standard diagnosis service may be executed on a thread of the corresponding session. FIG. 3 shows another UDS-based communication method according to an embodiment of this application. The method may include the following steps.

401: An ECU receives a diagnosis request sent by an upper computer.

402: The ECU determines whether the diagnosis request is a first diagnosis request.

403: When determining that the diagnosis request is a first diagnosis request, the ECU creates a session based on the first diagnosis request, and obtains an identifier corresponding to the session.

404: The ECU sends a first positive response including the identifier to the upper computer.

Step 401 to step 404 are similar to step 301 to step 304. For details, refer to the foregoing description. Details are not described herein again.

405: The ECU receives a second diagnosis request sent by the upper computer.

After creating a session based on the first diagnosis request, the ECU returns an identifier of a corresponding session to the upper computer. Then, the ECU may further receive the second diagnosis request sent by the upper computer. The second diagnosis request includes a first identifier corresponding to a first session and a standard diagnosis service (which may be referred to as a first standard diagnosis service) defined in the UDS, and the first session is one of created sessions.

406: The ECU executes the first standard diagnosis service on a thread of the first session based on the second diagnosis request, to obtain a diagnosis result.

After receiving the second diagnosis request sent by the upper computer, the ECU may execute the first standard diagnosis service on the thread of the first session based on the second diagnosis request, to obtain the diagnosis result.

It should be noted herein that, in this embodiment of this application, a specific process in which the ECU executes the first standard diagnosis service on the thread of the first session is similar to a current process of executing a standard diagnosis service on a thread of a session provided in the UDS. For example, if the first standard diagnosis service has a high security level, to execute the first standard diagnosis service on the thread of the session provided by the UDS, session verification needs to be performed first, that is, the session is switched to a corresponding high level. Then, permission verification is performed, that is, whether the ECU has permission to execute the first standard diagnosis service is verified. If the verification succeeds, the first standard diagnosis service is executed on the session provided by the UDS. In this embodiment of this application, a similar process is also used, and details are not described herein again.

407: The ECU sends a second positive response including the diagnosis result to the upper computer.

After obtaining the diagnosis result, the ECU may send the second positive response including the diagnosis result to the upper computer.

It should be noted that in some implementations of this application, step 401 to step 404 may be repeated until a quantity of created sessions reaches a preset value, and then step 405 to step 407 are performed. Alternatively, step 405 to step 407 may be directly performed after step 401 to step 404. This is not specifically limited herein. A difference lies in that in the first manner, a preset quantity of sessions are created first, and then one of the sessions is selected based on an identifier to execute a standard diagnosis service; in the second manner, after a session is created, the newly created session is directly used to execute a standard diagnosis service.

In the foregoing implementation of this application, based on the private diagnosis service customized based on the UDS, the ECU can execute a standard diagnosis service on a thread of a created session based on the second diagnosis request belonging to the private diagnosis service, and different standard diagnosis services can be concurrently executed on threads of a plurality of sessions, to achieve high execution efficiency.

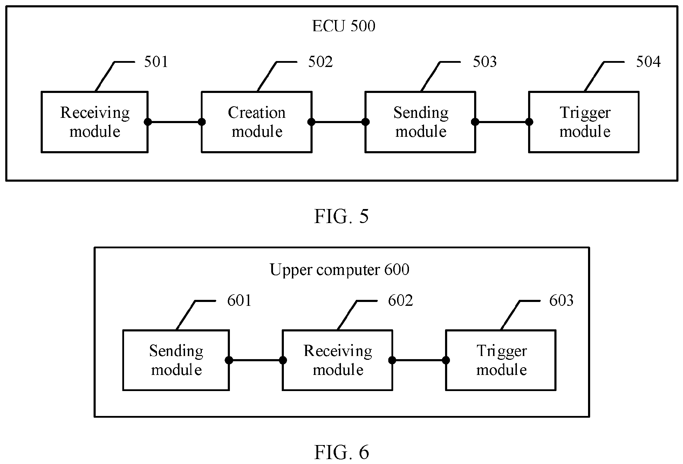

Based on the embodiments corresponding to FIG. 3 to FIG. 4, to better implement the foregoing solutions in embodiments of this application, the following further provides related devices configured to implement the foregoing solutions. Specifically, FIG. 5 is a schematic diagram of a structure of an ECU according to an embodiment of this application. The ECU 500 includes a receiving module 501, a creation module 502, and a sending module 503. The receiving module 501 is configured to receive a first diagnosis request sent by an upper computer, where the first diagnosis request belongs to a private diagnosis service customized based on the UDS, and specifically corresponds to a first sub-service of the customized private diagnosis service. The creation module 502 is configured to create a session based on the first diagnosis request, and obtain an identifier corresponding to the session. An identifier (similar to an ID) is correspondingly allocated to each newly created session, to identify the corresponding session. The sending module 503 is configured to send a first positive response including the identifier to the upper computer.

In the foregoing implementation of this application, based on the private diagnosis service customized based on the UDS, the ECU can create a new session based on the first diagnosis request belonging to the private diagnosis service (a session inherent in the original UDS protocol still exists), to implement multi-session management, and resolve a problem that requests belonging to standard diagnosis services in the conventional UDS cannot be concurrently processed.

It should be noted that in a possible design, the ECU 500 may further include a trigger module 504, and the trigger module 504 is configured to trigger the receiving module 501, the creation module 502, and the sending module 503 to repeat corresponding steps until a quantity of created sessions reaches a preset value. For example, a preset value n (for example, n=10) may be preset. In this case, 10 sessions may be created additionally by repeating the foregoing steps for 10 times.

In the foregoing implementation of this application, the trigger module 504 is additionally added to the ECU 500, to trigger the receiving module 501, the creation module 502, and the sending module 503 to create a plurality of sessions. An advantage of this is that more diagnosis requests can be concurrently executed on the ECU, to improve execution efficiency of the ECU.

In a possible design, the receiving module 501 may be further configured to: after the sending module 503 sends the first positive response to the upper computer, receive a second diagnosis request sent by the upper computer, where the second diagnosis request also belongs to the private diagnosis service, and specifically corresponds to a second sub-service of the customized private diagnosis service, the second diagnosis request includes a first identifier corresponding to a first session and a first standard diagnosis service defined in the UDS, and the first session is one of created sessions; then, execute the first standard diagnosis service on a thread of the first session based on the second diagnosis request, to obtain a diagnosis result.

The sending module 503 is further configured to send a second positive response including the diagnosis result to the upper computer.

In the foregoing implementation of this application, based on the private diagnosis service customized based on the UDS, the ECU can execute a standard diagnosis service on a thread of a created session based on the second diagnosis request belonging to the private diagnosis service, and different standard diagnosis services can be concurrently executed on threads of a plurality of sessions, to achieve high execution efficiency.

In a possible design, the first diagnosis request corresponding to the first sub-service of the private diagnosis service customized based on the UDS may include a first SID and a first data field. The first SID is a SID that is not defined in the UDS. For example, any one of Ox82-Ox82, 0x89-0xB9, OxBF-OxC2, and 0xC9-0xF9 may be used as the first SID. The first SID is used to indicate that the first diagnosis request belongs to the private diagnosis service, the first data field is used to indicate that the first diagnosis request belongs to the first sub-service of the private diagnosis service, and the first sub-service is creating a session.

In the foregoing implementation of this application, the private diagnosis service is customized based on the UDS by using some SIDs that are not defined in the UDS. When the SID corresponding to the customized private diagnosis service is a SID that is not defined in the UDS, specific content included in the first diagnosis request corresponding to the first sub-service of the customized private diagnosis service is further described. The ECU may directly perform a corresponding action based on the content, and this is flexible.

In a possible design, a protocol format of the first diagnosis request may be represented by a format type "SID1+SF1". SID1 is the first SID and occupies one byte. SF1 is the first data field, represents the first sub-service of the private diagnosis service, and also usually occupies one byte (or may occupy a plurality of bytes, which is not limited). The first sub-service is creating a session.

In the foregoing implementation of this application, a specific protocol format of the first diagnosis request is described, and this is operable.

In a possible design, the second diagnosis request corresponding to a second sub-service of the private diagnosis service customized based on the UDS may further include the first SID and a second data field. The first SID is a SID that is not defined in the UDS. For example, any one of 0x82-0x82, 0x89-0xB9, 0xBF-0xC2, and 0xC9-0xF9 may be used as the first SID. The first SID is used to indicate that the second diagnosis request belongs to the private diagnosis service, the second data field is used to indicate that the second diagnosis request belongs to the second sub-service of the private diagnosis service, and the second sub-service is executing a standard diagnosis service on a thread of a corresponding created session based on an identifier.

In the foregoing implementation of this application, the private diagnosis service is customized based on the UDS by using some SIDs that are not defined in the UDS. Specific content included in the second diagnosis request corresponding to the second sub-service of the customized private diagnosis service is further described. The ECU may directly perform a corresponding action based on the content, and this is flexible.

In a possible design, a protocol format of the second diagnosis request may be represented by a format type "SID1+SF2+D1+B1". SID1 is the first SID and occupies one byte. SF2 is the second data field, represents the second sub-service of the private diagnosis service, and also usually occupies one byte (or may occupy a plurality of bytes, which is not limited). D1 represents an identifier, and D1 corresponds to a created session, and also usually occupies one byte (or may occupy a plurality of bytes, which is not limited). B1 represents a to-be-executed diagnosis service in 26 standard diagnosis services in Table 2. A format type of B1 is the same as a format type of a standard diagnosis service. For details, refer to descriptions corresponding to Table 2. Details are not described herein.

In the foregoing implementation of this application, a specific protocol format of the second diagnosis request is described, and this is operable.

In a possible design, the first diagnosis request corresponding to the first sub-service of the private diagnosis service customized based on the UDS may include a second SID and a third data field. The second SID is a SID with a value Ox31 in the UDS, because a standard diagnosis service named "RoutineControl" is a diagnosis service with high freedom, and Ox31 may be used to add a special data field to a corresponding diagnosis request. The third data field is used to indicate that the first diagnosis request belongs to the private diagnosis service and belongs to the first sub-service of the private diagnosis service. The first sub-service is creating a session.

In the foregoing implementation of this application, some special data fields may be added to the diagnosis request corresponding to the standard diagnosis service Ox31 to customize the private diagnosis service. In addition, when the SID corresponding to the customized private diagnosis service is the SID with the value Ox31 in the UDS, content included in the first diagnosis request corresponding to the first sub-service of the customized private diagnosis service is further described, and the ECU may directly perform a corresponding action based on the content. This is flexible.

In a possible design, a protocol format of the first diagnosis request may be represented by a format type "SID2+SF1+X1". SID2 is a SID with a value Ox31 and occupies one byte. "SF1+X1" is the third data field, and X1 is a field of a function customized based on the UDS, and usually occupies two bytes (or may occupy one byte or more than two bytes, which is not limited). X1 is used to indicate that "SID2+SF1" belongs to the first sub-service of the private diagnosis service, and the first sub-service is creating a session.

In the foregoing implementation of this application, a specific protocol format of the first diagnosis request is described, and this is operable.

In a possible design, the second diagnosis request corresponding to the second sub-service of the private diagnosis service customized based on the UDS may further include the second SID and a fourth data field. The second SID is a SID with a value Ox31 in the UDS, the fourth data field is used to indicate that the second diagnosis request belongs to the private diagnosis service and a second sub-service of the private diagnosis service, and the second sub-service is executing a standard diagnosis service on a thread of a corresponding created session based on an identifier.

In the foregoing implementation of this application, some special data fields may be added to the diagnosis request corresponding to the standard diagnosis service Ox31 to customize the private diagnosis service. In addition, when the SID corresponding to the customized private diagnosis service is the SID with the value Ox31 in the UDS, content included in the second diagnosis request corresponding to the second sub-service of the customized private diagnosis service is further described, and the ECU may directly perform a corresponding action based on the content. This is flexible.

In a possible design, a protocol format of the second diagnosis request may be represented by a format type of "SID2+SF2+X1+D1+B1". SID2 is a SID (that is, the second SID) with a value Ox31 and occupies one byte. "SF2+X1" is the fourth data field, and X1 is a field of a function customized based on the UDS, and usually occupies two bytes (or one byte or more than two bytes may be occupied, which is not limited). X1 is used to indicate that "SID2+SF1" belongs to the second sub-service of the private diagnosis service. D1 represents an identifier, and D1 corresponds to a created session, and also usually occupies one byte (or may occupy a plurality of bytes, which is not limited). B1 represents a to-be-executed diagnosis service in 26 standard diagnosis services in Table 2. A format type of B1 is the same as a format type of a standard diagnosis service. For details, refer to descriptions corresponding to Table 2. Details are not described herein.

In the foregoing implementation of this application, a specific protocol format of the second diagnosis request is described, and this is operable.

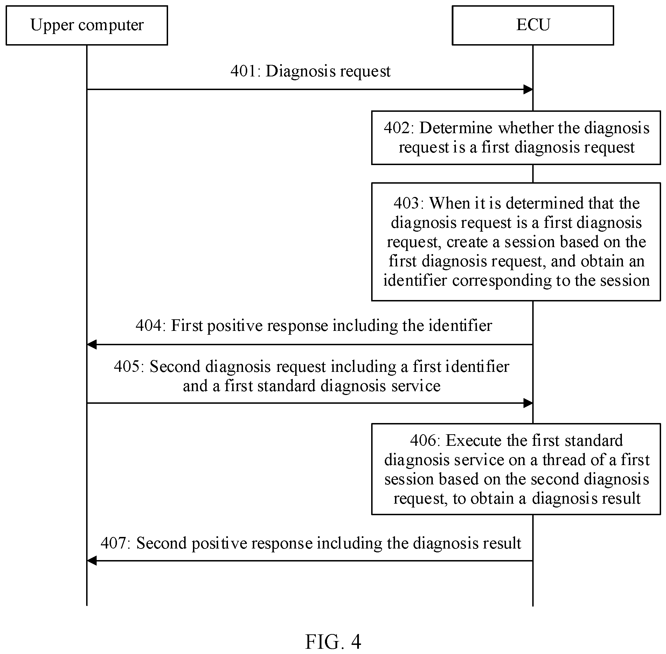

It should be noted that content such as information exchange and an execution process between the modules/units in the ECU 500 is based on a same concept as the embodiments corresponding to FIG. 3 and FIG. 4 in this application. For specific content, refer to the descriptions in the foregoing method embodiments of this application. Details are not described herein again.

In addition, an embodiment of this application further provides an upper computer 600. Specifically, FIG. 6 is another schematic diagram of a structure of an upper computer according to an embodiment of this application. The upper computer 600 includes: a sending module 601 and a receiving module 602. The sending module 601 is configured to send a first diagnosis request to an ECU, so that the ECU creates a session based on the first diagnosis request, and obtains an identifier corresponding to the session. An identifier (similar to an ID) is allocated to each newly created session, to identify the corresponding session. The first diagnosis request belongs to a private diagnosis service customized based on the UDS, and specifically corresponds to a first sub-service of the customized private diagnosis service. The receiving module 602 is configured to receive a first positive response including the identifier from the ECU.

In the foregoing implementation of this application, the upper computer sends the first diagnosis request to the ECU, so that the ECU can create a new session based on the private diagnosis service customized based on the UDS and the first diagnosis request belonging to the private diagnosis service (a session inherent in the original UDS protocol still exists), to implement multi-session management, and resolve a problem that requests belonging to standard diagnosis services in the conventional UDS cannot be concurrently processed.

It should be noted that in a possible design, the upper computer 600 may further include a trigger module 603, and the trigger module 603 is configured to trigger the sending module 601 and the receiving module 602 to repeat corresponding steps until a quantity of created sessions reaches a preset value. For example, a preset value n (for example, n=10) may be preset. In this case, 10 sessions may be created additionally by repeating the foregoing steps for 10 times.

In the foregoing implementation of this application, the trigger module 603 is additionally added to the upper computer 600, to trigger the sending module 601 and the receiving module 602 to repeat corresponding steps, so that the ECU creates a plurality of sessions accordingly. An advantage of this is that more diagnosis requests can be concurrently executed on the ECU, to improve execution efficiency of the ECU.

In a possible design, the sending module 601 is further configured to: after the receiving module 602 receives the first positive response sent by the ECU, send a second diagnosis request to the ECU, so that the ECU executes a first standard diagnosis service on a thread of a first session based on the second diagnosis request, to obtain a diagnosis result. The second diagnosis request belongs to the private diagnosis service, and specifically corresponds to a second sub-service of the customized private diagnosis service. The second diagnosis request includes a first identifier corresponding to the first session and the first standard diagnosis service defined in the UDS, and the first session is one of created sessions

The receiving module 602 is further configured to receive a second positive response including the diagnosis result from the ECU.

In the foregoing implementation of this application, the upper computer may further send the second diagnosis request to the ECU, so than the ECU can customize the private diagnosis service based on the UDS, and execute, based on the second diagnosis request belonging to the private diagnosis service, a standard diagnosis service on a thread of a created session, and different standard diagnosis services can be concurrently executed on threads of a plurality of sessions, to achieve high execution efficiency.

In a possible design, the first diagnosis request corresponding to the first sub-service of the private diagnosis service customized based on the UDS may include a first SID and a first data field. The first SID is a SID that is not defined in the UDS. For example, any one of Ox82-Ox82, 0x89-0xB9, OxBF-OxC2, and 0xC9-0xF9 may be used as the first SID. The first SID is used to indicate that the first diagnosis request belongs to the private diagnosis service, the first data field is used to indicate that the first diagnosis request belongs to the first sub-service of the private diagnosis service, and the first sub-service is creating a session.

In the foregoing implementation of this application, the private diagnosis service is customized based on the UDS by using some SIDs that are not defined in the UDS. When the SID corresponding to the customized private diagnosis service is a SID that is not defined in the UDS, specific content included in the first diagnosis request corresponding to the first sub-service of the customized private diagnosis service is further described. The ECU may directly perform a corresponding action based on the content, and this is flexible.

In a possible design, a protocol format of the first diagnosis request may be represented by a format type "SID1+SF1". SID1 is the first SID and occupies one byte. SF1 is the first data field, represents the first sub-service of the private diagnosis service, and also usually occupies one byte (or may occupy a plurality of bytes, which is not limited). The first sub-service is creating a session.

In the foregoing implementation of this application, a specific protocol format of the first diagnosis request is described, and this is operable.

In a possible design, the second diagnosis request corresponding to a second sub-service of the private diagnosis service customized based on the UDS may further include the first SID and a second data field. The first SID is a SID that is not defined in the UDS. For example, any one of Ox82-Ox82, 0x89-0xB9, OxBF-OxC2, and 0xC9-0xF9 may be used as the first SID. The first SID is used to indicate that the second diagnosis request belongs to the private diagnosis service, the second data field is used to indicate that the second diagnosis request belongs to the second sub-service of the private diagnosis service, and the second sub-service is executing a standard diagnosis service on a thread of a corresponding created session based on an identifier.

In the foregoing implementation of this application, the private diagnosis service is customized based on the UDS by using some SIDs that are not defined in the UDS. Specific content included in the second diagnosis request corresponding to the second sub-service of the customized private diagnosis service is further described. The ECU may directly perform a corresponding action based on the content, and this is flexible.

In a possible design, a protocol format of the second diagnosis request may be represented by a format type "SID1+SF2+D1+B1". SID1 is the first SID and occupies one byte. SF2 is the second data field, represents the second sub-service of the private diagnosis service, and also usually occupies one byte (or may occupy a plurality of bytes, which is not limited). D1 represents an identifier, and D1 corresponds to a created session, and also usually occupies one byte (or may occupy a plurality of bytes, which is not limited). B1 represents a to-be-executed diagnosis service in 26 standard diagnosis services in Table 2. A format type of B1 is the same as a format type of a standard diagnosis service. For details, refer to descriptions corresponding to Table 2. Details are not described herein.

In the foregoing implementation of this application, a specific protocol format of the second diagnosis request is described, and this is operable.

In a possible design, the first diagnosis request corresponding to the first sub-service of the private diagnosis service customized based on the UDS may include a second SID and a third data field. The second SID is a SID with a value Ox31 in the UDS, because a standard diagnosis service named "RoutineControl" is a diagnosis service with high freedom, and Ox31 may be used to add a special data field to a corresponding diagnosis request. The third data field is used to indicate that the first diagnosis request belongs to the private diagnosis service and belongs to the first sub-service of the private diagnosis service. The first sub-service is creating a session.

In the foregoing implementation of this application, some special data fields may be added to the diagnosis request corresponding to the standard diagnosis service Ox31 to customize the private diagnosis service. In addition, when the SID corresponding to the customized private diagnosis service is the SID with the value Ox31 in the UDS, content included in the first diagnosis request corresponding to the first sub-service of the customized private diagnosis service is further described, and the ECU may directly perform a corresponding action based on the content. This is flexible.

In a possible design, a protocol format of the first diagnosis request may be represented by a format type "SID2+SF1+X1". SID2 is a SID with a value 0x31 and occupies one byte. "SF1+X1" is the third data field, and X1 is a field of a function customized based on the UDS, and usually occupies two bytes (or may occupy one byte or more than two bytes, which is not limited). X1 is used to indicate that "SID2+SF1" belongs to the first sub-service of the private diagnosis service, and the first sub-service is creating a session.

In the foregoing implementation of this application, a specific protocol format of the first diagnosis request is described, and this is operable.

In a possible design, the second diagnosis request corresponding to the second sub-service of the private diagnosis service customized based on the UDS may further include the second SID and a fourth data field. The second SID is a SID with a value Ox31 in the UDS, the fourth data field is used to indicate that the second diagnosis request belongs to the private diagnosis service and a second sub-service of the private diagnosis service, and the second sub-service is executing a standard diagnosis service on a thread of a corresponding created session based on an identifier.

In the foregoing implementation of this application, some special data fields may be added to the diagnosis request corresponding to the standard diagnosis service Ox31 to customize the private diagnosis service. In addition, when the SID corresponding to the customized private diagnosis service is the SID with the value Ox31 in the UDS, content included in the second diagnosis request corresponding to the second sub-service of the customized private diagnosis service is further described, and the ECU may directly perform a corresponding action based on the content. This is flexible.

In a possible design, a protocol format of the second diagnosis request may be represented by a format type of "SID2+SF2+X1+D1+B1". SID2 is a SID (that is, the second SID) with a value Ox31 and occupies one byte. "SF2+X1" is the fourth data field, and X1 is a field of a function customized based on the UDS, and usually occupies two bytes (or one byte or more than two bytes may be occupied, which is not limited). X1 is used to indicate that "SID2+SF1" belongs to the second sub-service of the private diagnosis service. D1 represents an identifier, and D1 corresponds to a created session, and also usually occupies one byte (or may occupy a plurality of bytes, which is not limited). B1 represents a to-be-executed diagnosis service in 26 standard diagnosis services in Table 2. A format type of B1 is the same as a format type of a standard diagnosis service. For details, refer to descriptions corresponding to Table 2. Details are not described herein.

In the foregoing implementation of this application, a specific protocol format of the second diagnosis request is described, and this is operable.

It should be noted that content such as information exchange and an execution process between the modules/units in the upper computer 600 is based on a same concept as the embodiments corresponding to FIG. 3 and FIG. 4 in this application. For specific content, refer to the descriptions in the foregoing method embodiments of this application. Details are not described herein again.

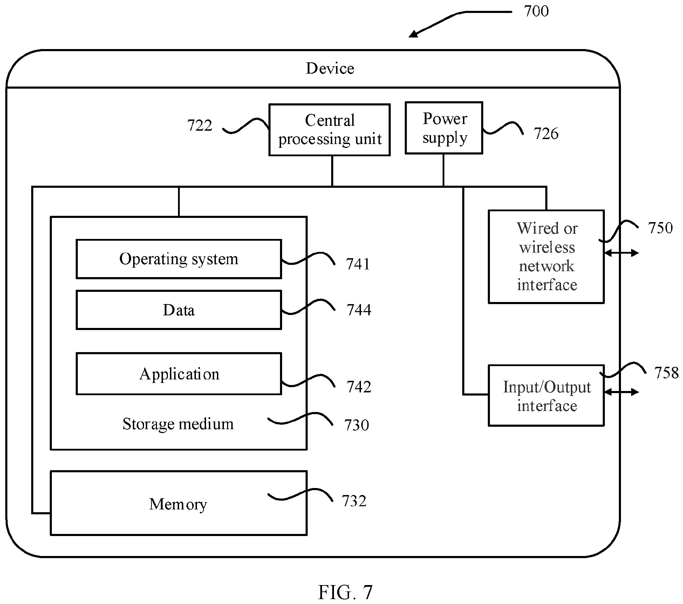

The following describes a device provided in an embodiment of this application. The device may be an upper computer, or may be an ECU. FIG. 7 is a schematic diagram of a structure of a device 700 according to an embodiment of this application. When the device 700 is an ECU, the modules described in the embodiment corresponding to FIG. 5 may be deployed on the device 700, to implement a function of the ECU 500 in the embodiment corresponding to FIG. 5. When the device 700 is an upper computer, the modules described in the embodiment corresponding to FIG. 6 may be deployed on the device 700, to implement the function of the ECU 500 in the embodiment corresponding to FIG. 6.

Specifically, the device 700 is implemented by one or more servers. The device 700 may vary greatly due to different configurations or performance, and may include one or more central processing units (central processing units, CPU) 722 (for example, one or more processors) and a memory 732, and one or more storage media 730 (for example, one or more mass storage devices) that store an application program 742 or data 744. The memory 732 and the storage medium 730 may implement temporary or persistent storage. A program stored in the storage medium 730 may include one or more modules (not shown in the figure), and each module may include a series of instruction operations on the device 700. Further, the central processing unit 722 may be configured to communicate with the storage medium 730, and perform, on the device 700, the series of instruction operations in the storage medium 730.

The device 700 may further include one or more power supplies 726, one or more wired or wireless network interfaces 750, one or more input/output interfaces 758, and/or one or more operating systems 741, such as Windows ServerTM, Mac OS XTM, UnixTM, LinuxTM, and FreeBSDTM.

It should be noted that, in this embodiment of this application, when the device 700 is an ECU, the central processing unit 722 is configured to perform the steps performed by the ECU in any one of the corresponding embodiments in FIG. 3 and FIG. 4. For example, the central processing unit 722 may be configured to receive a diagnosis request sent by an upper computer, and after receiving the diagnosis request, determine whether the diagnosis request is the first diagnosis request based on a SID and/or a data field carried in the diagnosis request on the premise that a corresponding permission is met. A determining manner includes but is not limited to the following manners: a. Assuming that the SID carried in the diagnosis request is a SID (namely, a first SID) that is not defined in the UDS, it indicates that the diagnosis request belongs to a private diagnosis service customized based on the UDS. Further, a sub-service of the private diagnosis service to which the diagnosis request belongs is determined based on the data field carried in the diagnosis request. Assuming that the data field carried in the diagnosis request is a first data field, it indicates that the diagnosis request is the first diagnosis request. b. Assuming that the SID carried in the diagnosis request is a SID (namely, a second SID) with a value Ox31 in the UDS, whether the data field carried in the diagnosis request is a third data field is further determined. Assuming that the data field carried in the diagnosis request is the third data field, it indicates that the diagnosis request is the first diagnosis request. When the central processing unit 722 determines that the diagnosis request is the first diagnosis request, based on the private diagnosis service customized based on the UDS, the central processing unit 722 creates a session based on the first diagnosis request, and obtains an identifier corresponding to the session. An identifier (similar to an ID) is allocated to each newly created session, to identify the corresponding session. After creating the session based on the first diagnosis request, the central processing unit 722 further sends a positive response to the upper computer. The positive response may be referred to as a first positive response, and the first positive response includes the identifier corresponding to the newly created session. After the foregoing steps, a session is created.

It should be noted that, when the device 700 is an ECU, the central processing unit 722 may be further configured to perform any step performed by the ECU in the method embodiment corresponding to any one of FIG. 3 and FIG. 4 in this application. For specific content, refer to the descriptions in the foregoing method embodiments of this application. Details are not described herein again.

It should be further noted that, in this embodiment of this application, when the device 700 is an upper computer, the central processing unit 722 is configured to perform the steps performed by the upper computer in any one of the corresponding embodiments in FIG. 3 and FIG. 4. For example, the central processing unit 722 may be configured to send a first diagnosis request to an ECU, so that the ECU creates a session based on the first diagnosis request and obtains an identifier corresponding to the session. An identifier (similar to an ID) is correspondingly allocated to each newly created session, to identify the corresponding session. The first diagnosis request belongs to a private diagnosis service customized based on a UDS, and specifically corresponds to a first sub-service of the customized private diagnosis service. Then, a first positive response including the identifier is received from the ECU. After the foregoing steps, the ECU creates a session based on the first diagnosis request belonging to the private diagnosis service.

It should be noted that, when the device 700 is an ECU, the central processing unit 722 may be further configured to perform any step performed by the upper computer in the method embodiment corresponding to any one of FIG. 3 and FIG. 4 in this application. For specific content, refer to the descriptions in the foregoing method embodiments of this application. Details are not described herein again.

An embodiment of this application further provides a computer-readable storage medium. The computer-readable storage medium stores a program used for signal processing. When the program is run on a computer, the computer is enabled to perform the steps performed by the simulation device in the method described in the foregoing embodiments.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a read-only memory (read only memory, ROM), a random access memory (random access memory, RAM), a magnetic disk, or an optical disc of a computer, and includes several instructions for instructing a computer device (which may be a personal computer, a network device, or the like) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

## Claims

1. A UDS-based communication method, comprising:
receiving a first diagnosis request sent by an upper computer, wherein the first diagnosis request belongs to a private diagnosis service customized based on the unified diagnosis service UDS;
creating a session based on the first diagnosis request, and obtaining an identifier corresponding to the session; and
sending a first positive response comprising the identifier to the upper computer.

2. The method according to claim 1, wherein after the sending a first positive response to the upper computer, the method further comprises:
repeating the foregoing steps until a quantity of created sessions reaches a preset value.

3. The method according to claim 1 or 2, wherein after the sending a first positive response to the upper computer, the method further comprises:
receiving a second diagnosis request sent by the upper computer, wherein the second diagnosis request belongs to the private diagnosis service, the second diagnosis request comprises a first identifier corresponding to a first session and a first standard diagnosis service defined in the UDS, and the first session is one of created sessions;
executing the first standard diagnosis service on a thread of the first session based on the second diagnosis request, to obtain a diagnosis result; and
sending a second positive response comprising the diagnosis result to the upper computer.

4. The method according to any one of claims 1 to 3, wherein the first diagnosis request comprises:
a first service identifier SID and a first data field, wherein the first SID is a SID for which no diagnosis service type is defined in the UDS, the first SID is used to indicate that the first diagnosis request belongs to the private diagnosis service, the first data field is used to indicate that the first diagnosis request belongs to a first sub-service of the private diagnosis service, and the first sub-service is creating a session.

5. The method according to claim 4, wherein the second diagnosis request further comprises:
the first SID and a second data field, wherein the second data field is used to indicate that the second diagnosis request belongs to a second sub-service of the private diagnosis service, and the second sub-service is executing a standard diagnosis service on a thread of a corresponding session based on an identifier.

6. The method according to any one of claims 1 to 3, wherein the first diagnosis request comprises:
a second SID and a third data field, wherein the second SID is a SID with a value Ox31 in the UDS, the third data field is used to indicate that the first diagnosis request belongs to the private diagnosis service and a first sub-service of the private diagnosis service, and the first sub-service is creating a session.

7. The method according to claim 6, wherein the second diagnosis request further comprises:
the second SID and a fourth data field, wherein the fourth data field is used to indicate that the second diagnosis request belongs to the private diagnosis service and a second sub-service of the private diagnosis service, and the second sub-service is executing a standard diagnosis service on a thread of a corresponding session based on an identifier.

8. The method according to claim 4 or 5, wherein a protocol format of the first diagnosis request comprises:
SID1+SF1, wherein SID1 is the first SID and occupies one byte, and SF1 is the first sub-service of the private diagnosis service and occupies one byte.

9. The method according to claim 5 or 8, wherein a protocol format of the second diagnosis request comprises:
SID1+SF2+D1+B1, wherein SID1 is the first SID and occupies one byte, SF2 is the second sub-service of the private diagnosis service and occupies one byte, D1 is the first identifier and occupies one byte, and B1 is a standard protocol format of the first standard diagnosis service.

10. The method according to claim 6 or 7, wherein a protocol format of the first diagnosis request comprises:
SID2+SF1+X1, wherein SID2 is a SID with a value 0x31, X1 occupies two bytes and is a field of a function customized based on the UDS, and X1 is used to indicate that SID2+SF1 belongs to the first sub-service of the private diagnosis service.

11. The method according to claim 7 or 10, wherein a protocol format of the second diagnosis request comprises:
SID2+SF2+X1+D1+B1, wherein SID2 is a SID with a value Ox31, X1 occupies two bytes and is a field of a function customized based on the UDS, X1 is used to indicate that SID2+SF2 belongs to the second sub-service of the private diagnosis service, D1 is the first identifier and occupies one byte, and B2 is a standard protocol format of the first standard diagnosis service.

12. A UDS-based communication method, comprising:
sending a first diagnosis request to an electronic control unit ECU, so that the ECU creates a session based on the first diagnosis request and obtains an identifier corresponding to the session, wherein the first diagnosis request belongs to a private diagnosis service customized based on the unified diagnosis service UDS; and
receiving a first positive response comprising the identifier from the ECU.

13. The method according to claim 12, wherein after the receiving a first positive response comprising the identifier from the ECU, the method further comprises:
repeating the foregoing steps until a quantity of created sessions reaches a preset value.

14. The method according to claim 12 or 13, wherein after the receiving a first positive response comprising the identifier from the ECU, the method further comprises:
sending a second diagnosis request to the ECU, so that the ECU executes a first standard diagnosis service on a thread of a first session based on the second diagnosis request to obtain a diagnosis result, wherein the second diagnosis request belongs to the private diagnosis service, the second diagnosis request comprises a first identifier corresponding to the first session and the first standard diagnosis service defined in the UDS, and the first session is one of created sessions; and
receiving a second positive response comprising the diagnosis result from the ECU.

15. The method according to any one of claims 12 to 14, wherein the first diagnosis request comprises:
a first service identifier SID and a first data field, wherein the first SID is a SID for which no diagnosis service type is defined in the UDS, the first SID is used to indicate that the first diagnosis request belongs to the private diagnosis service, the first data field is used to indicate that the first diagnosis request belongs to a first sub-service of the private diagnosis service, and the first sub-service is creating a session.

16. The method according to claim 15, wherein the second diagnosis request further comprises:
the first SID and a second data field, wherein the second data field is used to indicate that the second diagnosis request belongs to a second sub-service of the private diagnosis service, and the second sub-service is executing a standard diagnosis service on a thread of a corresponding session based on an identifier.

17. The method according to any one of claims 12 to 14, wherein the first diagnosis request comprises:
a second SID and a third data field, wherein the second SID is a SID with a value Ox31 in the UDS, the third data field is used to indicate that the first diagnosis request belongs to the private diagnosis service and a first sub-service of the private diagnosis service, and the first sub-service is creating a session.

18. The method according to claim 17, wherein the second diagnosis request further comprises:
the second SID and a fourth data field, wherein the fourth data field is used to indicate that the second diagnosis request belongs to the private diagnosis service and a second sub-service of the private diagnosis service, and the second sub-service is executing a standard diagnosis service on a thread of a corresponding session based on an identifier.

19. An electronic control unit ECU, comprising:
a receiving module, configured to receive a first diagnosis request sent by an upper computer, wherein the first diagnosis request belongs to a private diagnosis service customized based on the unified diagnosis service UDS;
a creation module, configured to create a session based on the first diagnosis request, and obtain an identifier corresponding to the session; and
a sending module, configured to send a first positive response comprising the identifier to the upper computer.

20. The ECU according to claim 19, wherein the ECU further comprises:
a trigger module, configured to trigger the receiving module, the creation module, and the sending module to repeat corresponding steps until a quantity of created sessions reaches a preset value.

21. The ECU according to claim 19 or 20, wherein the receiving module is further configured to:
after the sending module sends the first positive response to the upper computer, receive a second diagnosis request sent by the upper computer, wherein the second diagnosis request belongs to the private diagnosis service, the second diagnosis request comprises a first identifier corresponding to a first session and a first standard diagnosis service defined in the UDS, and the first session is one of created sessions; and
execute the first standard diagnosis service on a thread of the first session based on the second diagnosis request, to obtain a diagnosis result; and
the sending module is further configured to send a second positive response comprising the diagnosis result to the upper computer.

22. The ECU according to any one of claims 19 to 21, wherein the first diagnosis request comprises:
a first service identifier SID and a first data field, wherein the first SID is a SID for which no diagnosis service type is defined in the UDS, the first SID is used to indicate that the first diagnosis request belongs to the private diagnosis service, the first data field is used to indicate that the first diagnosis request belongs to a first sub-service of the private diagnosis service, and the first sub-service is creating a session.

23. The ECU according to claim 22, wherein the second diagnosis request further comprises:
the first SID and a second data field, wherein the second data field is used to indicate that the second diagnosis request belongs to a second sub-service of the private diagnosis service, and the second sub-service is executing a standard diagnosis service on a thread of a corresponding session based on an identifier.

24. The ECU according to any one of claims 19 to 21, wherein the first diagnosis request comprises:
a second SID and a third data field, wherein the second SID is a SID with a value Ox31 in the UDS, the third data field is used to indicate that the first diagnosis request belongs to the private diagnosis service and a first sub-service of the private diagnosis service, and the first sub-service is creating a session.

25. The ECU according to claim 24, wherein the second diagnosis request further comprises:
the second SID and a fourth data field, wherein the fourth data field is used to indicate that the second diagnosis request belongs to the private diagnosis service and a second sub-service of the private diagnosis service, and the second sub-service is executing a standard diagnosis service on a thread of a corresponding session based on an identifier.

26. The ECU according to claim 22 or 23, wherein a protocol format of the first diagnosis request comprises:
SID1+SF1, wherein SID1 is the first SID and occupies one byte, and SF1 is the first sub-service of the private diagnosis service and occupies one byte.

27. The ECU according to claim 23 or 26, wherein a protocol format of the second diagnosis request comprises:
SID1+SF2+D1+B 1, wherein SID1 is the first SID and occupies one byte, SF2 is the second sub-service of the private diagnosis service and occupies one byte, D1 is the first identifier and occupies one byte, and B 1 is a standard protocol format of the first standard diagnosis service.

28. The ECU according to claim 24 or 25, wherein a protocol format of the first diagnosis request comprises:
SID2+SF1+X1, wherein SID2 is a SID with a value 0x31, X1 occupies two bytes and is a field of a function customized based on the UDS, and X1 is used to indicate that SID2+SF1 belongs to the first sub-service of the private diagnosis service.

29. The ECU according to claim 25 or 28, wherein a protocol format of the second diagnosis request comprises:
SID2+SF2+X1+D1+B1, wherein SID2 is a SID with a value 0x31, X1 occupies two bytes and is a field of a function customized based on the UDS, X1 is used to indicate that SID2+SF2 belongs to the second sub-service of the private diagnosis service, D1 is the first identifier and occupies one byte, and B2 is a standard protocol format of the first standard diagnosis service.

30. An upper computer, comprising:
a sending module, configured to send a first diagnosis request to an electronic control unit ECU, so that the ECU creates a session based on the first diagnosis request and obtains an identifier corresponding to the session, wherein the first diagnosis request belongs to a private diagnosis service customized based on the unified diagnosis service UDS; and
a receiving module, configured to receive a first positive response comprising the identifier from the ECU.

31. The upper computer according to claim 30, wherein the upper computer further comprises:
a trigger module, configured to trigger the sending module and the receiving module to repeat corresponding steps until a quantity of created sessions reaches a preset value.

32. The upper computer according to claim 30 or 31, wherein the sending module is further configured to:
after the receiving module receives the first positive response from the ECU, send a second diagnosis request to the ECU, so that the ECU executes a first standard diagnosis service on a thread of a first session based on the second diagnosis request, to obtain a diagnosis result, wherein the second diagnosis request belongs to the private diagnosis service, the second diagnosis request comprises a first identifier corresponding to the first session and the first standard diagnosis service defined in the UDS, and the first session is one of created sessions; and
the receiving module is further configured to receive a second positive response comprising the diagnosis result from the ECU.

33. The upper computer according to any one of claims 30 to 32, wherein the first diagnosis request comprises:
a first service identifier SID and a first data field, wherein the first SID is a SID for which no diagnosis service type is defined in the UDS, the first SID is used to indicate that the first diagnosis request belongs to the private diagnosis service, the first data field is used to indicate that the first diagnosis request belongs to a first sub-service of the private diagnosis service, and the first sub-service is creating a session.

34. The upper computer according to claim 33, wherein the second diagnosis request further comprises:
the first SID and a second data field, wherein the second data field is used to indicate that the second diagnosis request belongs to a second sub-service of the private diagnosis service, and the second sub-service is executing a standard diagnosis service on a thread of a corresponding session based on an identifier.

35. The upper computer according to any one of claims 30 to 32, wherein the first diagnosis request comprises:
a second SID and a third data field, wherein the second SID is a SID with a value Ox31 in the UDS, the third data field is used to indicate that the first diagnosis request belongs to the private diagnosis service and a first sub-service of the private diagnosis service, and the first sub-service is creating a session.

36. The upper computer according to claim 35, wherein the second diagnosis request further comprises:
the second SID and a fourth data field, wherein the fourth data field is used to indicate that the second diagnosis request belongs to the private diagnosis service and a second sub-service of the private diagnosis service, and the second sub-service is executing a standard diagnosis service on a thread of a corresponding session based on an identifier.

37. An electronic control unit ECU, comprising a processor and a memory, wherein the processor is coupled to the memory;
the memory is configured to store a program; and
the processor is configured to execute the program in the memory, so that the ECU performs the method according to any one of claims 1 to 11.

38. An upper computer, comprising a processor and a memory, wherein the processor is coupled to the memory;
the memory is configured to store a program; and
the processor is configured to execute the program in the memory, so that the ECU performs the method according to any one of claims 12 to 18.

39. A computer-readable storage medium, comprising a program, wherein when the program is run on a computer, the computer is enabled to perform the method according to any one of claims 1 to 11, or the method according to any one of claims 12 to 18.

40. A computer program product, comprising instructions, wherein when the instructions are run on a computer, the computer is enabled to perform the method according to any one of claims 1 to 11, or the method according to any one of claims 12 to 18.
